# EUROPÄISCHE PATENTSCHRIFT

(11) **EP 2 232 019 B1**
(45) Veröffentlichungstag und Bekanntmachung des Hinweises auf die Patenterteilung: **20.07.2016**
(21) Anmeldenummer: 08862550.4
(22) Anmeldetag: 14.11.2008
(51) Int. Cl.: F01K 27/00, F03G 3/00, F03G 7/04

(54) **VERFAHREN, VORRICHTUNG UND SYSTEM ZUM EINPRÄGEN VON ENERGIE IN EIN MEDIUM**
METHOD, DEVICE, AND SYSTEM FOR INJECTING ENERGY INTO A MEDIUM
PROCÉDÉ, DISPOSITIF ET SYSTÈME D'APPLICATION D'ÉNERGIE À UN FLUIDE

(30) Priorität: 17.12.2007 DE 102007061167; 26.02.2008 DE 102008011218; 22.04.2008 DE 102008020270
(43) Veröffentlichungstag der Anmeldung: 29.09.2010
(73) Patentinhaber: Wolter, Klaus, 40625 Düsseldorf (DE)
(72) Erfinder: Wolter, Klaus, 40625 Düsseldorf (DE)
(74) Vertreter: Cohausz & Florack
(86) Internationale Anmeldenummer: PCT/EP2008/065600
(87) Internationale Veröffentlichungsnummer: WO 2009/077275

(56) Entgegenhaltungen:
- EP-A- 0 082 671
- DE-A1- 3 445 785
- US-A- 4 306 416
- US-A- 4 896 509
- US-A- 5 704 209

## Beschreibung

Die Erfindung betrifft ein Verfahren, eine Vorrichtung und ein System zum Einprägen von Energie in ein Medium.

Solch ein Verfahren, eine Vorrichtung und ein System sind beispielsweise aus der US-A-4 306 416 bekannt.

Ein nicht-gasförmiges Trägermedium kann durch Einbringen von Wärmeenergie in ein gasförmiges Trägermedium umgewandelt werden, so dass das gasförmige Trägermedium aufsteigt. Auf einer vorgegebenen Höhe kann das gasförmigen Trägermediums wieder in ein nicht-gasförmiges Trägermedium rückumgewandelt werden. Die potentielle Energie des rückgewonnenen nicht-gasförmigen Trägermedium auf der vorgegebenen Höhe kann dann beispielsweise genutzt werden, um in eine Nutzenergie umgewandelt zu werden, etwa indem das Trägermedium fallengelassen wird um eine Turbine anzutreiben. Alternativ oder zusätzlich kann das rückgewonnenen nicht-gasförmigen Trägermedium auch als Destillat eines ursprünglichen Mediums zur Nutzung entnommen werden, etwa als Trinkwasser, wenn das ursprüngliche Medium Salzwasser war.

Das Rückumwandeln des gasförmigen Trägermediums in ein nicht-gasförmiges Trägermedium kann durch Kühlung des gasförmigen Trägermediums erfolgen. Die Kühlung kann dabei zum Beispiel dadurch erfolgt, dass ein Transportmedium durch in der vorgegebenen Höhe angeordnete Kühlbereiche geleitet wird und dort Wärme des Trägermediums aufnimmt.

Wenn eine Kühlung mittels eines Transportmediums erfolgt, so kann die von dem Transportmedium aufgenommene Wärme darüber hinaus genutzt werden, um einen Beitrag zu der Erwärmung des Trägermediums zu liefern. Dies hat zur Folge, dass während des Betriebes von außen nur die Verlustenergien, einschließlich der entnommenen Nutzenergien, eingebracht werden müssen.

Es ist eine Aufgabe der Erfindung, solche Verfahren sowie entsprechende Vorrichtungen und Systeme weiter zu verbessern.

Es wird ein Verfahren vorgeschlagen, das ein Umwandeln eines nicht-gasförmigen Trägermediums in ein gasförmiges Trägermedium durch eingebrachte Wärmeenergie umfasst, so dass das gasförmige Trägermedium auf eine vorgegebene Höhe aufsteigt. Das Verfahren umfasst ferner ein Komprimieren des gasförmigen Trägermediums. Das Verfahren umfasst ferner ein Rückumwandeln des komprimierten gasförmigen Trägermediums auf der vorgegebenen Höhe in ein nicht-gasförmiges Trägermedium mittels eines Wärme des Trägermediums aufnehmenden Kühlkreislaufs. Das Verfahren umfasst ferner ein Rückführen der von dem Kühlkreislauf aufgenommenen Wärme zur Nutzung für eine Erwärmung des Trägermediums.

Des Weiteren wird eine Vorrichtung vorgeschlagen. Die Vorrichtung umfasst einen Hohlraum und einen am unteren Ende des Hohlraums angeordneten Verdampfungsraum. Der Verdampfungsraum ist ausgeformt zum Umwandeln eines nicht-gasförmigen Trägermediums in ein gasförmiges Trägermedium mittels eingebrachter Wärmeenergie, so dass das gasförmige Trägermedium auf eine vorgegebene Höhe aufsteigt. Die Vorrichtung umfasst ferner Kompressionsmittel, ausgeformt zum Komprimieren des gasförmigen Trägermediums. Die Vorrichtung umfasst ferner einen Kühlkreislauf. Der Kühlkreislauf ist ausgeformt zum Rückumwandeln des komprimierten, gasförmigen Trägermediums auf der vorgegebenen Höhe in ein nicht-gasförmiges Trägermedium durch Aufnahme von Wärme des Trägermediums. Der Kühlkreislauf ist darüber hinaus ausgeformt zum Rückführen der aufgenommenen Wärme zur Nutzung für eine Erwärmung des Trägermediums.

Schließlich wird ein System vorgeschlagen, dass eine solche Vorrichtung umfasst, und zusätzlich eine Vorrichtung ausgeformt zum Gewinnen von Wärmeenergie, die der ersten Vorrichtung zur Verfügung gestellt wird.

Es wird also vorgeschlagen, dass vorhandene Wärmeenergie eingesetzt wird, um ein Trägermedium auf eine größere Höhe zu befördern. Dies erfolgt, indem ein nicht-gasförmiges - also festes oder flüssiges - Trägermedium in einen gasförmigen Aggregatzustand versetzt wird und dadurch aufsteigt. Das gasförmige Trägermedium wird durch Kompression zwecks Volumenverringerung und Temperaturerhöhung auf einen höheren Druck gebracht. Auf einer vorgesehenen Höhe wird das komprimierte Trägermedium von einem Kühlkreislauf gekühlt, so dass es kondensiert und somit wieder in einen nicht-gasförmigen Aggregatzustand versetzt wird. Wieder in einen nicht-gasförmigen Aggregatzustand versetzt steht das Trägermedium für eine beliebige Nutzung zur Verfügung. Die vom Kühlkreislauf aufgenommene Wärme wird weitergenutzt, indem sie einen Beitrag zur Erwärmung des Trägermediums an beliebiger Stelle vor dessen Kompression leistet.

Durch die Kompression des Trägermediums kann die Wärme aus dem Trägermedium mit einer höheren Temperatur in den Kühlkreislauf eingespeist werden. Daraus ergibt sich der Vorteil, dass die Rückführung der Wärmeenergie in dem Kühlkreislauf einfacher gestaltet werden kann. Insbesondere kann aufgrund der bei höherer Temperatur anfallenden Wärme auf den Einsatz einer Wärmepumpe verzichtet werden.

Das Komprimieren des gasförmigen Trägermediums kann an beliebiger Stelle erfolgen. Es kann somit unmittelbar nach dem Umwandeln des nicht-gasförmigen Trägermediums in ein gasförmiges Trägermedium erfolgen. Vorrichtungsmäßig können die Kompressionsmittel zu diesem Zweck im Hohlraum unmittelbar anschließend an den Verdampfungsraum angeordnet sein. Das Komprimieren kann alternativ unmittelbar vor dem Rückumwandeln des komprimierten gasförmigen Trägermediums in ein nicht-gasförmiges Trägermedium erfolgen. Vorrichtungsmäßig können die Kompressionsmittel zu diesem Zweck im Hohlraum unmittelbar unterhalb der vorgegebenen Höhe angeordnet sein. Das Komprimieren kann weiter alternativ irgendwo auf dem Weg zwischen dem Umwandeln des nicht-gasförmigen Trägermediums in ein gasförmiges Trägermedium und dem Rückumwandeln des komprimierten gasförmigen Trägermediums in ein nicht-gasförmiges Trägermedium. Vorrichtungsmäßig können die Kompressionsmittel zu diesem Zweck im Hohlraum auf jeder beliebigen Höhe auf der Strecke zwischen dem Verdampfungsraum und der vorgegebenen Höhe angeordnet sein.

Das komprimierte, nicht-gasförmige Trägermedium kann zu einem beliebigen Zeitpunkt wieder dekomprimiert werden. Falls das komprimierte, nicht-gasförmige Trägermedium in einem Kreislauf wieder in ein gasförmiges Trägermedium umgewandelt werden soll, so erfolgt die Dekomprimierung spätestens vor der erneuten Umwandlung. Bei der Dekomprimierung des nicht-gasförmigen Trägermediums kühlt dieses weiter ab. Die bei der Dekomprimierung freiwerdende Energie kann auf verschiedene Weisen genutzt werden, so dass möglichst wenig Energie verloren geht.

Durch Dekomprimieren des komprimierten gasförmigen Trägermediums kann beispielsweise eine Turbine angetrieben werden. Dies kann auf der vorgegebenen Höhe erfolgen, aber ebenso auf einer beliebigen anderen Höhe, insbesondere auf einer niedrigeren Höhe. Die beschriebene Vorrichtung kann eine entsprechend ausgeformte Turbine aufweisen.

Alternativ oder zusätzlich kann das rückgewonnene nicht-gasförmige Trägermedium von einer höheren Höhe auf eine niedrigere Höhe fallengelassen werden und dort mittels seiner kinetischen Energie eine Turbine antreiben. Vorrichtungsmäßig kann zu diesem Zweck ein Fallweg vorgesehen werden, der ausgeformt ist zum Ermöglichen eines Fallenlassens des rückgewonnenen nicht-gasförmigen Trägermediums von einer höheren Höhe auf eine niedrigere Höhe, sowie eine Turbine, die auf der niedrigeren Höhe angeordnet ist und die ausgeformt ist um zumindest durch die kinetische Energie von fallendem Trägermedium angetrieben zu werden.

Die von solchen Turbinen zur Verfügung gestellte Energie kann sowohl verfahrensintern als auch verfahrensextern genutzt werden. Verfahrensintern kann die von einer Turbine zur Verfügung gestellte Energie zum Beispiel genutzt werden, um mittels einer mechanischen Kopplung das Komprimieren des gasförmigen Trägermediums zu unterstützen. Die Kopplung kann beispielsweise zwischen Turbine und Kompressor erfolgen. Alternativ kann die Energie genutzt werden, um nach einer Umwandlung in eine andere Energieform mittels der resultierenden Energie die für das Komprimieren des gasförmigen Trägermediums benötigte Energie zu reduzieren. Für die Umwandlung kann eine Energieumwandlungsanordnung bereitgestellt werden, die die resultierende Energie dann den Kompressionsmitteln zur Verfügung stellt. Alternativ kann die von der Turbine bereit gestellte Energie genutzt werden, um nach einer Umwandlung in Heizenergie, beispielsweise durch eine Energieumwandlungsanordnung, das Trägermedium vor, in oder nach dem Umwandeln von einem nicht-gasförmigen Zustand in einen gasförmiges Zustand zusätzlich zu erwärmen.

Zum Beispiel nachdem das Trägermedium zum Antreiben einer Turbine genutzt wurde, kann das Trägermedium des weiteren verwendet werden, um ein vom Kühlkreislauf umfasstes Transportmedium zum Beispiel mittels eines Wärmetauschers wieder zu kühlen.

Alternativ kann ein vom Kühlkreislauf umfasstes Transportmedium auch gegen nicht-gasförmiges Trägermedium ausgetauscht werden, zum Beispiel nachdem dieses zum Antreiben der Turbine genutzt wurde. Zu diesem Zweck können entsprechend ausgeformte Austauschmittel vorgesehen werden.

Zwischen der Komprimierung und der Dekomprimierung des Trägermediums kann das Verfahren bei Umgebungsdruck ablaufen. Alternativ kann das Trägermedium zusätzlich während des gesamten Verfahrens einem den Umgebungsdruck übersteigenden Druck unterliegen, der durch das Komprimieren weiter erhöht wird. Der Überdruck kann durch speziell vorgesehene Überdruckmittel eingestellt werden. Hierdurch wird das Volumen des Trägermediums in der gasförmigen Phase verringert, so dass die baulichen Maße der Vorrichtung bei gleichem Durchsatz des Trägermediums reduziert werden können.

Neben dem Trägermedium kann auch ein vom Kühlkreislauf umfasstes Transportmedium während des gesamten Verfahrens einem den Umgebungsdruck übersteigenden Druck unterliegen. Die Überdruckmittel sind für diesen Fall entsprechend ausgeformt.

In einem Ausführungsbeispiel wird das gasförmige Trägermedium während seines Aufstiegs durch mindestens eine Verengung geführt, beispielsweise durch mindestens eine Düse oder eine beliebige düsenequivalente Anordnung.

Bei geeigneter Wahl der eingebrachten Wärmeenergie kann die Erfindung so implementiert werden kann, dass sie vollkommen emissionsfrei ist. Generell kann aber jegliche Energiequelle zur Gewinnung der genutzten Wärmeenergie verwendet werde. So kann die eingebrachte Wärmeenergie aus Erdwärme, Wasserwärme, Luftwärme, einem fossilen Energieträger, einem Kernenergieträger und/oder Sonnenenergie gewonnen werden.

Die Wärmeenergie kann ausschließlich am Ausgangspunkt des aufsteigenden Trägermediums eingebracht werden, vorrichtungsmäßig somit ausschließlich über den Verdampfungsraum. In einem alternativen Ansatz kann die Wärmeenergie aber auch verteilt über die Höhe, die das gasförmige Trägermedium überwindet, in das Trägermedium eingebracht werden.

Die Vorrichtung kann hierzu ein entsprechend angeordnetes Energieeinbringungselement aufweisen. Ein solches

Energieeinbringungselement kann selber ein Energiegewinnungselement umfassen, oder aber von einem Energiegewinnungselement mit Energie versorgt werden.

Ein über die Höhe verteiltes Einbringen der Wärmeenergie hat den Vorteil, dass Wärmeenergie auf niedrigerem Temperaturniveau benötigt wird. So kann auf ausgewählten Höhen oder kontinuierlich entlang der Höhe eines Hohlraums jeweils genau so viel Energie zugeführt werden, dass das Trägermedium bis zum Erreichen der vorgegebenen Höhe im gasförmigen Zustand verbleibt.

Darüber hinaus kann die Erfindung wesentlich kompakter und kostengünstiger implementiert werden, wenn beispielsweise Solarkollektoren als Energiegewinnungs- und -einbringungselemente unmittelbar auf der Hülle eines Hohlraums, in dem das gasförmige Trägermedium aufsteigt, angebracht werden oder gar diese Hülle ganz oder teilweise bilden.

Das Energieeinbringungselement kann einen Hohlraum, in dem das Trägermedium aufsteigt, komplett umschließen, oder beispielsweise im Fall von Solarkollektoren nur auf einer sonnenzugewandten Seite angeordnet sein. Ferner kann sich das Element über die gesamte Höhe des Hohlraums erstrecken oder nur auf einem ausgewählten Höhenabschnitt oder auf mehreren ausgewählten Höhenabschnitten angeordnet sein.

Auch die von dem Kühlkreislauf rückgeführte Wärme kann dementsprechend auch nicht nur einen Beitrag zu der Wärmeenergie leisten, mit der das nicht-gasförmige Trägermedium in ein gasförmiges Trägermedium umgewandelt wird, sondern alternativ oder zusätzlich ebenfalls einen Beitrag zu einer Wärmeenergie, mit der das bereits gasförmige Trägermedium während des Aufstiegs weiter erwärmt wird.

Der Kühlkreislauf kann Wärme des Trägermediums zum Beispiel dadurch aufnehmen, dass ein Transportmedium im Kühlkreislauf durch in der vorgegebenen Höhe angeordnete Kühlbereiche etwa eines Kühlaggregats geleitet wird. Die Kühlbereiche können dabei durch Schläuche oder sonstige Leitungen gebildet werden. Die Kühlbereiche können dabei so ausgebildet und angeordnet werden, dass sie gleichzeitig zur Ableitung des rückgewonnenen nicht-gasförmigen Trägermediums zu einer vorgesehenen Sammelstelle genutzt werden können.

In einer ergänzenden Ausführungsform könnte zur Unterstützung der Rückumwandlung auch ein Stoff unmittelbar in das gasförmige Trägermedium eingebracht werden, beispielsweise durch einen entsprechend ausgebildeten Sammler. Das Einbringen kann dabei etwa durch Einsprühen oder Einregnen erfolgen. Nachdem der Stoff dem Trägermedium Wärme entzogen und damit die Kondensation unterstützt hat, können Stoff und Trägermedium zur weiteren Verwendung wieder separiert werden. Dies kann beispielsweise auf einfache Weise erfolgen, wenn das Trägermedium Wasser und der Stoff Öl ist. Stattdessen kann aber auch bereits rückgewonnenes Trägermedium in das aufsteigende, gasförmige Trägermedium eingesprüht oder eingeregnet werden. Durch die somit vergrößerte Kollisionsoberfläche für das aufsteigende, noch gasförmige Trägermedium wird die Rückumwandlung ebenfalls unterstützt. Hierbei sollte lediglich sichergestellt werden, dass das eingesprühte oder eingeregnete Trägermedium nicht zurück in den Verdampfungsraum fällt, sondern der beabsichtigten Nutzung zugeführt wird. Dies kann beispielsweise dadurch erreicht werden, dass das Trägermedium erst in einem am oberen Ende abgewinkelten Bereich des Hohlraums eingesprühte oder eingeregnete wird.

Ein Sammler kann eine - gegebenenfalls gekühlte - obere Begrenzungsfläche des Hohlraums umfassen, die so ausgebildet ist, dass sie das rückumgewandelte nicht-gasförmige Trägermedium beispielsweise über ein Sammelbecken der weiteren Verwendung zuleitet.

In einer beispielhaften Ausführungsform wird das rückgewonnene nicht-gasförmiges Trägermedium vor der weitern Verwendung zwischengespeichert, etwa mittels eines Zwischenspeichers.

Eine Zwischenspeicherung des rückgewonnenen nicht-gasförmigen Trägermediums ist zum Beispiel geeignet, eine Reserve zu liefern für Zeiten in denen keine externe Wärmeenergie zur Verfügung steht. Des Weiteren lassen sich mit einer Zwischenspeicherung Spitzenbedarfe an dem rückgewonnenen nicht-gasförmigen Trägermedium abdecken oder aber Spitzen in der Lieferung des rückgewonnenen nicht-gasförmigen Trägermediums abpuffern.

Die potentielle Energie des rückgewonnenen nicht-gasförmigen Trägermediums auf der vorgegebenen Höhe kann zur Umwandlung in eine zur externen Nutzung gewünschte Energieform eingesetzt werden, beispielsweise mittels des bereits erwähnten Antreibens einer Turbine.

Zu einer Umwandlung der potentiellen Energie des Trägermediums in eine andere Energieform kann die potentielle Energie also zunächst in kinetische Energie umgewandelt werden. Dies kann erfolgen, indem das rückgewonnene nicht-gasförmige Trägermedium auf einem Fallweg von einer höheren Höhe auf eine niedrigere Höhe fallengelassen wird, etwa durch ein Fallrohr. Die kinetische Energie kann dann in eine andere Energieform umgewandelt werden. Hierzu kann ein Energiewandler, wie eine Turbine mit einem eventuell nachgeschalteten Generator, vorgesehen werden.

Im Endergebnis kann die potentielle Energie in jede beliebige Energieform umgewandelt werden. Es versteht sich, dass das Umwandeln in eine gewünschte Energieform auch das Speichern in einem gewünschten Energieträger umfasst. In Frage kommen somit unter anderem eine Umwandlung in mechanische Energie, in elektrische Energie, in Energie zur Erzeugung eines chemischen Energieträgers und/oder in Energie zur Erzeugung eines physikalischen Energieträgers.

Auch nach der Umwandlung der potentiellen Energie in eine andere Energieform kann das rückgewonnene nicht-gasförmige Trägermedium bei Bedarf in einem Zwischenspeicher zwischenspeichert werden.

Stattdessen oder im Anschluss kann das rückgewonnene nicht-gasförmige Trägermedium nach der Umwandlung der potentiellen Energie in eine andere Energieform zumindest teilweise in einem geschlossenen Kreislauf weiter eingesetzt werden. Vorrichtungsmäßig wird das Trägermedium hierzu dem Verdampfungsraum wieder zugeführt.

Alternativ oder zusätzlich kann das rückgewonnene nicht-gasförmige Trägermedium auch für eine externe Nutzung entnommen werden.

Durch das Umwandeln des nicht-gasförmigen Trägermediums in ein gasförmiges Trägermedium kann das Trägermedium je nach Zusammensetzung beispielsweise destilliert werden. Das destillierte, rückgewonnene nicht-gasförmigen Trägermediums kann dann vor, nach oder statt der Umwandlung der potentiellen Energie in eine andere Energieform zumindest teilweise über einen Entnahmeanschluss entnommen werden.

Wird zum Beispiel Meereswasser als Trägermedium eingesetzt, so verdampft vereinfacht dargestellt Wasser, gelöste Gase werden frei und Salze fällen aus. Im Kondensationsbereich in der vorgegebenen Höhe steht dann vornehmlich reines Wasser zur Verfügung. Hieraus ergeben sich wieder vielfältige Anwendungs- und Ausführungsmöglichkeiten, wie Trinkwassergewinnung und Bewässerung. Wird Brauchwasser oder Abwasser aus Industrie oder Haushalten als Trägermedium eingesetzt, so kann mittels der Destillation eine Brauchwasser oder Abwasserreinigung erfolgen, sowie eine Gewinnung der Reststoffe.

Das gasförmige Trägermedium kann in einem Hohlraum aufsteigen, der bis auf eventuelle Verunreinigungen keine weiteren Stoffe beinhaltet. Alternativ kann der Hohlraum aber auch ein Füllmedium umfassen, das von dem aufsteigenden gasförmigen Trägermedium mitgenommen wird. Für das Füllmedium kommt Luft oder jegliches andere Gas oder Gasgemisch in Frage.

Die Verwendung eines Füllmediums erlaubt es, unerwünschte Druckunterschiede zwischen dem Hohlraum und der äußeren Umgebung auszugleichen. Solche Druckunterschiede können sich aufgrund verschiedener Betriebstemperaturen, die durch die Änderungen der Aggregatzustände des Trägermediums hervorgerufen werden, ergeben. Da das Füllmedium durch das Trägermedium mitgenommen wird, kann ein geschlossener Kreislauf für das Füllmedium vorgesehen werden, in dem das Füllmedium nach Entfernen des Trägermediums in der vorgegebenen Höhe wieder im Verdampfer zur Verfügung gestellt wird. Alternativ kann aber auch ein offenes System vorgesehen werden, in dem das Füllmedium von außen durch die Mitnahme innerhalb des Hohlraums angesaugt wird und nach der Nutzung wieder nach außen entlassen wird.

Generell bieten sich für alle eingesetzten und nicht zur externen Nutzung entnommenen Stoffe, wie Trägermedium, Transportmedium und Füllmedium, sowie für alle nicht zur externen Nutzung entnommenen Energien Ausführungsformen mit geschlossenen Kreisläufen sowie mit offenen Durchläufen an.

Verschiedene Aspekte der Erfindung können mit anderen Worten auch wie folgt beschrieben werden:
Bezuggenommen wird auf die Aspekte der Aggregatzustandsänderungen, die Aspekte des Wärmeeintrages in das Trägermedium (beliebige Wärmequelle, also insbesondere auch Sonnenenergie), den Aspekt der Energiegewinnung durch verfrachten (= heben) einer trägen Masse auf eine größere Höhe im Schwerefeld mittels Ausnutzen des Kamineffektes (also Umwandeln der chaotischen Bewegung der Molekel (= Wärme) des Trägermediums in eine gerichtete gemeinsame Bewegung (= kälterer Wind) durch geometrische Gegebenheiten des Gefäßes (= Gebäude der Höhe h) in dem sich die "warmen" Molekel befinden), was den Gewinn potentieller Energie darstellt, den Aspekt der Wasserherstellung (Nutz-, Brauch-, Trinkwasser), den Aspekt des Wärmerücktransports, der Wärmerückgewinnung im Verfahren und / oder der Vorrichtung zum Gewinnen von Energie und die Aspekte der Energieumwandlung (Turbine, Generator), wie die der Speicherung und Zwischenspeicherung der gewonnenen Energien in physikalischen wie auch chemischen Speichermedien.

(Hier sei darauf hingewiesen, daß die voranstehende Aufzählung nur die Kernaspekte aufzählt, was nicht bedeutet, daß die restlichen Aspekte ohne Bedeutung sind. Vielmehr ist diese Beschränkung in der Aufzählung nur als Gedächtnisstütze für Kernaspekte zu verstehen.)

Die Weiterentwicklung und Vereinfachung besteht darin, dass bisher separate Teile des Verfahrens und/oder der Vorrichtung zum Einprägen von Energie in ein Medium durch eine Erweiterung und andere Prozessführung vollständig überflüssig werden. Dies führt, auch wenn die zu Grunde liegende Idee identisch ist, zu einer anderen bisher nicht bekannten Lösung.

Die Vereinfachung besteht nun darin, dass das gasförmige Trägermedium vor dem Kondensator, jedoch nachdem es die größere Höhe zwecks Einprägens potentieller Energie erreicht hat, komprimiert wird. Die für die Kompression (die Kompression kann mittels aller bekannten Verfahren und/oder Vorrichtungen mit denen Gas komprimiert werden kann erfolgen; wie z.B. Kolbenpumpen, Membranpumpen, Rotationsverdichter), die eine Druckerhöhung ist, notwendige Energie wird, da jetzt in dem vereinfachten Verfahren, Vorrichtung und System zum Gewinnen von Energie der gesamte Zweig bis zur Turbine diese Druckerhöhung sieht, in dieser zurückgewonnen. Die so zurückgewonnene Energie kann in einer Ausführungsform durch eine direkte mechanische Kopplung mittels Achse und optional Getriebe dem Kompressor wieder zugeführt werden. Allerdings kann auch der Umweg über die Wandlung der Bewegungsenergie der Turbine in andere Energieträger gewählt werden, die dann nach entsprechender Rückwandlung dem Kompressor zugeführt werden können (z.B.: Generator - elektrische Energie - Motor). Dies entspricht einer indirekten Bereitstellung oder Zuführung der Energie für die Kompression.

In einer weiteren Ausführung wird die Kompression des dampfförmigen Trägermediums nicht nach, sondern vor oder während des Höhentransportes des Trägermediums vorgenommen. Also frühestens direkt nach dem Verdampfen im Verdampfer. Dies ist möglich, da der Kamineffekt durch den Vorgang der Kompression nicht beeinflusst wird. Bautechnisch bedeutet dies eine nachhaltige Vereinfachung, da dadurch praktisch alle in Bewegung befindlichen Teile sich im Fußbereich des vereinfachten Verfahrens, Vorrichtung und Systems zum Gewinnen von Energie befinden.

Der Vorteil und damit die Vereinfachung besteht nun darin, dass auf Grund der Druckerhöhung im gasförmigen Aggregatzustand eine Erhöhung des Siede- / Kondensationspunkts stattfindet. Dies ergibt, dass die Verdampfungswärme im Kondensator auf einer höheren Temperatur in das Transportmedium eingespeist wird. Sie steht damit direkt und optimal über das Transportmedium für den Verdampfungsprozess im Verdampfer bereit und muss nicht erst über eine Wärmepumpe auf ein höheres Temperaturniveau verbracht werden.

In einer weiteren Ausführung wird der selbe Effekt der Anhebung der Temperatur dadurch erzielt, dass anders als durch direkte Übertragung der gewonnenen mechanischen Energie von der Flüssigkeitsturbine auf den Gaskompressor zuerst eine Wandlung über die Flüssigkeitsturbine und den nachgeschalteten Generator in elektrische Energie stattfindet und diese dann über eine elektrische Heizung in das Trägermedium im oder nach dem Verdampfer eingespeist wird. Auch kann die mechanische Energie über Reibung direkt in Wärme umgewandelt und ebenso in das Trägermedium an den benannten Stellen eingekoppelt werden. Auch sind Kombinationen aller dieser Verfahrenswege möglich. In einer weiteren Ausführung wird die Einkopplung dieser Wärme in das Transportmedium vor oder im Verdampfer vorgenommen, was das selbe Resultat zur Folge hat.

Weiterhin ergibt sich bei der Druckminderung in der Turbine eine weitere Abkühlung des dort ja bereits flüssigen Trägermediums. Dies auch durch die dabei stattfindende Siedepunktserniedrigung. Dieser Aspekt stellt die Bereitstellung des Kältepols in dem gesamten vereinfachten Verfahren, Vorrichtung und Systems zum Gewinnen von Energie dar mit dem das Transportmedium auf seine Vorlauftemperatur gebracht wird. Dies wurde im zitierten Verfahren und/oder Vorrichtung zum Gewinnen von Energie durch eine separate Wärmepumpe dargestellt und erreicht, die jetzt wegfallen kann. Lediglich in einer weiteren Ausführungsform wird eine Wärmepumpe oder auch eine steuerbare Kühlvorrichtung zum Einstellen der Temperatur des Kältepols eingesetzt. Bei diesem Einstellungsvorgang transportiert dann die Wärmepumpe Wärmeenergie aus dem Transportmedium vornehmlich in den Kältepol.

In einer weiteren Ausführungsform wird das gesamte vereinfachte Verfahren, Vorrichtung und System zum Gewinnen von Energie auf ein höheres Druckniveau angehoben, um das Volumen der gasförmigen Phase des Trägermediums zu verringern; also alles, was Träger und Transportmedium umfasst. Die bereits beschriebenen Vereinfachungen bleiben davon unberührt sind aber jetzt auf das anderen Grunddruckniveau aufgesetzt. Allerdings kann in einer weiteren Ausführungsform auch nur das Trägermedium im Druck angehoben sein. (Beispiel: Im Fall von Wasser als Trägermedium ergeben bei 1 bar Druck 1 Liter Flüssigkeit ca. 1800 Liter Dampf. Bei 100 bar nur 18 Liter. Allerdings ist dabei die Änderung des Temperaturniveaus, auf dem die Verdampfung stattfindet zu beachten.) Dies hat wie leicht zu ersehen ist nachhaltig günstigere konstruktive Lösungen zur Folge, da die Anlage kompakter wird.

Im Fall der Ausführung zur Wassergewinnung bestehen nun zwei Unterausführungsformen. Beiden Unterausführungsformen ist aber gemein, dass das Trägermedium einem offenen Durchlauf unterliegt. Auch ist die oben beschriebene Rückführung der Verdampfungswärme Bestandteil. Einziger Unterschied ist, dass in der einen Unterausführung kein Wert auf den Gewinn der Pumpleistung (siehe zitiertes Verfahren und/oder Vorrichtung zum Gewinnen von Energie) gelegt wird, sondern der Gewinn der Energie in anderer Form (z.B: elektrische Energie) bevorzugt wird und in der anderen Unterausführung die Pumpleistung teilweise oder aber vollständig genutzt wird, was dadurch erreicht wird, dass teilweise oder aber ganz auf die Umsetzung der ja gewonnenen potentiellen Energie in den bereits beschriebenen Art und Weisen (siehe zitiertes Verfahren und/oder Vorrichtung zum Gewinnen von Energie) verzichtet wird. Beispielhaft wird dies so ausgeführt, dass die Turbine derart auf der Höhe h (= Pumphöhe) - also nach Gewinn der potentiellen Energie, die die Höhe auf der die Aggregatzustandsänderung des Trägermediums stattfindet darstellt, angeordnet ist, dass die zur Kompression notwendige Energie, die in der Druckerhöhung steckt, zurückgewonnen wird ohne das notwendigerweise auf die potentielle Energie zurückgegriffen wird.

Mit anderen Worten und etwas simplifiziert zusammengefasst zeichnet sich das vereinfachte Verfahren, Vorrichtung und System zum Gewinnen von Energie im Vergleich zum Vorgänger durch die Einführung eines Zweiges erhöhten Drucks aus. Dadurch fällt die Wärmepumpe komplett weg und die Rückführung der Verdampfungswärme wird zugleich deutlich vereinfacht.

Der Kreislauf des vereinfachten Verfahrens, Vorrichtung und Systems zum Gewinnen von Energie lässt sich beispielhaft an Hand eines Träger- wie Transportmediums nehmen wir z.B. Wasser und einer Energiequelle nehmen wir z.B. die Sonnenenergie wie folgt vereinfacht beschreiben:
Wasser wird unter Zufuhr von Sonnenenergie verdampft, wird durch die eingeprägte Wärme in einem geeigneten Gebäude über den Kamineffekt als Dampf auf eine Höhe gehoben (damit ist potentielle Energie gewonnen), dort wird der Dampf mit einem Kompressor auf einen höheren Druck gebracht (damit fällt die Verdampfungswärme bei einer höheren Siedetemperatur wieder an), mit Hilfe eines Kühlkreislaufes, der die Verdampfungswärme wieder in den Verdampfer transportiert, kondensiert, das unter diesem höheren Druck stehende gekühlte Kondensat wird einer Turbine zugeleitet, in der zumindest die zur Kompression notwendige Energie durch Abbau eben selber Druckerhöhung wieder zurückgewonnen wird, dabei wird gleichzeitig durch den Druckabbau im Kondensat beim Durchfluss durch die Turbine eine weitere Abkühlung erzielt und das so gewonnene kalte Kondensat dem Verdampfer wieder zugeführt. Zudem stellt dieses kalte Kondensat auch den Kältepol für den Kühlkreislauf dar, indem das Wasser des Kühlkreislaufes aus diesem genommen oder durch dieses gekühlt wird bevor es wieder dem Kondensator zugeführt wird.

In einer weiteren Ausführungsform findet die Umwandlung der Wärmeenergie des Trägermediums über adiabatische Expansion in kinetische Energie mittels Fluss des Trägermediums durch eine oder mehrere Düsen oder düsenequivalente Vorrichtungen statt. Als solche Düse kann zum Beispiel auch der nach dem Verdampfer befindliche Kamin betrachtet werden, wenn dessen Strömungsquerschnitt kleiner als der Strömungsquerschnitt des Volumens im Verdampfer ist. Jede andere Düsenkonstruktion wie konstruktive Anordnungen selbiger in das Verfahren, Vorrichtung und/oder System zum Gewinnen von Energie, die die Funktion des Umsetzens der Wärmeenergie in Bewegungsenergie zwecks Höhentransports bewirkt, ist ebenso nutzbar.

Die Erfindung wird im Folgenden anhand eines beispielhaften Ausführungsbeispiels näher erläutert. Dabei zeigt:
- Fig. 1: schematisch den Aufbau einer beispielhaften, erfindungsgemäßen Vorrichtung,
- Fig. 2: ein schematisches Flussdiagram, dass den Betrieb der Vorrichtung auf Figur 1 erläutert;
- Fig. 3: ein schematisches Blockdiagram einer beispielhaften, erfindungsgemäßen Vorrichtung; und
- Fig. 4: schematisch den Aufbau einer weiteren beispielhaften erfindungsgemäßen Vorrichtung;
- Fig. 5: ein schematisches Blockdiagram einer weiteren beispielhaften, erfindungsgemäßen Vorrichtung;
- Fig. 6: schematisch den Aufbau einer weiteren beispielhaften erfindungsgemäßen Vorrichtung;
- Fig. 7: schematisch eine beispielhafte Wärmerückgewinnung in einer erfindungsgemäßen Vorrichtung; und
- Fig. 8: ein Quadrantendiagramm eines beispielhaften, erfindungsgemäßen Wärme- Schwerefeldkraftwerks.

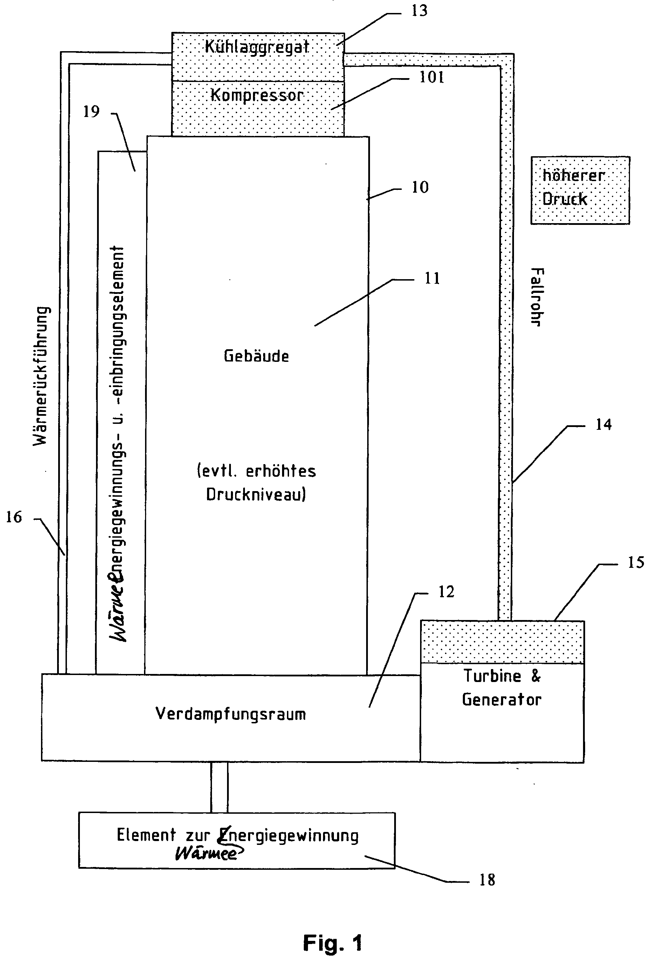

Figur 1 zeigt ein Ausführungsbeispiel einer erfindungsgemäßen Vorrichtung zum Einprägen von Energie in ein Medium, die zur effizienten Umwandlung von Energie nutzbar ist.

Die Vorrichtung umfasst ein Gebäude 10, dass einen Hohlraum 11 aufweist. Es versteht sich, dass der Hohlraum in einer alternativen Ausbildung auch schräg angeordnet sein könnte, beispielsweise an die Flanke eines Hügels angrenzend. Am unteren Ende des Hohlraums 11 auf der Höhe h = h₀ ist ein Verdampfungsraum 12 angeordnet.

Am oberen Ende des Hohlraums 11 ist zunächst ein Kompressor 101 und daran anschließend auf der Höhe h = h₁ ein Kühlaggregat 13 angeordnet. Der Kompressor 101 kann dabei beliebig ausgestaltet sein, beispielsweise als Kolbenpumpe, Membranpumpe, Rotationsverdichter, etc. Von dem Kühlaggregat 13 führt ein Fallrohr 14 zu einer Turbine 15 mit einem daran angeschlossenen Generator. Die Turbine 15 steht wiederum in Verbindung mit dem Verdampfungsraum 12. Das Kühlaggregat 13 steht darüber hinaus über eine Wärmerückführungsleitung 16 mit dem Verdampfungsraum 12 in Verbindung. Kühlaggregat 13 und Wärmerückführung 16 bilden Elemente eines Kühlkreislaufs.

In dem Hohlraum ist des Weiteren optional die Turbine eines konventionellen Aufwindkraftwerks 17 angeordnet.

Ein Element 18 zur Wärmeenergiegewinnung ist so angeordnet, dass es dem Verdampfungsraum 11 Wärmeenergie zuführen kann. Ein Beispiel für ein solches Element ist ein Solarkollektor. Anstelle der Sonne kann aber auch jede beliebige andere Energiequelle von dem Element 18 genutzt werden. Es versteht sich des Weiteren, dass auch eine Mehrzahl solcher Elemente vorgesehen sein kann. Ferner kann auch einfallende Sonnenergie direkt zur Erwärmung genutzt werden.

Schließlich ist ein Element 19 zur Wärmeenergiegewinnung und -einspeisung entlang der Hülle des Hohlraums angeordnet. Das Element 19 kann beispielsweise einen Solarkollektor umfassen.

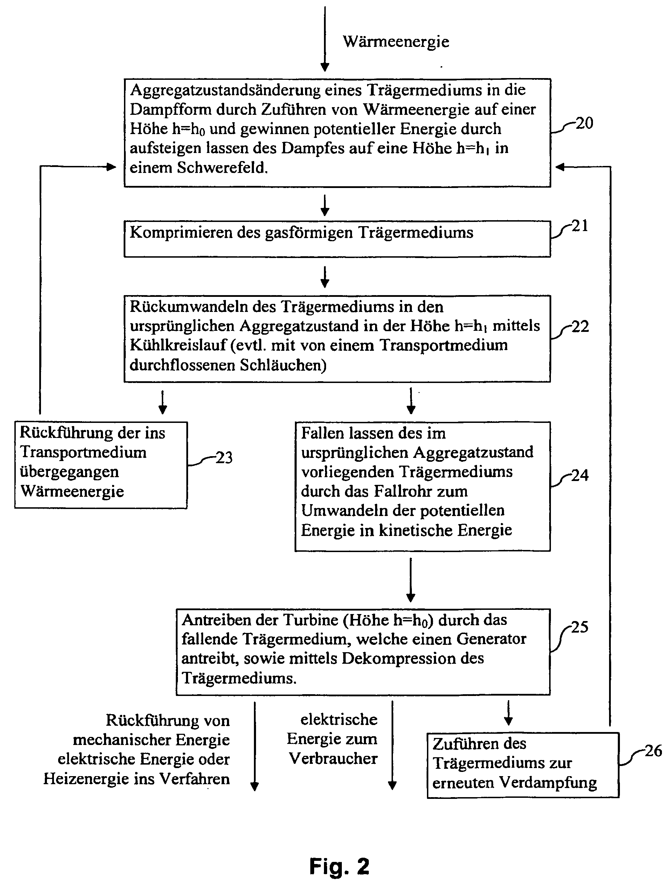

Figur 2 zeigt ein Flussdiagram, das die prinzipielle Funktionsweise der Vorrichtung aus Figur 1 veranschaulicht.

In dem Verdampfungsraum 12 befindet sich ein Trägermedium in nicht-gasförmigem Aggregatszustand, beispielsweise Wasser als flüssiges Trägermedium.

Dem Verdampfungsraum 12 wird von dem Element 18 zur Energiegewinnung externe Wärmeenergie zugeführt (Schritt 20).

Aufgrund der zugeführten Wärmeenergie wird das Trägermedium in einen gasförmigen Aggregatszustand umgewandelt, das heißt, es verdampft und steigt in dem Hohlraum 11 auf.

Das Element 19 bringt über die Höhe des Hohlraums verteilt zur Unterstützung des Aufstiegs zusätzlich Wärmeenergie in das aufsteigende, gasförmige Trägermedium ein, so dass eine Autokondensation vor Erreichung des Kühlaggregats 13 verhindert wird. Dem Verdampfungsraum 12 muss dann nur so viel Energie zugeführt werden, wie für die Umwandlung des nicht-gasförmigen Trägermediums in ein gasförmiges Trägermedium erforderlich ist.

Kurz vor der Höhe h = h₁ wird das Trägermedium vom dem Kompressor komprimiert, so dass das weiter aufsteigende gasförmige Trägermedium das Kühlaggregat 13 mit erhöhtem Druck erreicht (Schritt 21).

Auf der Höhe h = h₁ wird das Trägermedium in den vorherigen Aggregatszustand zurückversetzt (Schritt 22). Das heißt, der Dampf aus dem Trägermedium wird wieder kondensiert. In dem dargestellten Beispiel wird die Rückumwandlung durch ein Kühlaggregat 13 veranlasst. Ein solches Kühlaggregat kann zum Beispiel aus einem Netz aus Schläuchen bestehen. Das Netz bietet zum einen eine große Kollisionsoberfläche, um einen Kondensationsnebel zu erzeugen bzw. zu verdichten. Zum anderen kann durch die Schläuche ein Transportmedium als Kühlmittel fließen, das die Kondensation an dem Netz unterstützt. Das Netz leitet das gewonnene Kondensat in Richtung des Fallrohrs 14 ab.

Das in den Schläuchen erwärmte Transportmedium kann über die Wärmerückführungsleitung 16 dem Verdampfungsraum 12 zugeführt werden, um dort den Effekt der eingespeisten Wärmeenergie zu unterstützen und dann in abgekühltem Zustand wieder dem Kühlaggregat 13 zugeführt zu werden (Schritt 23). Aufgrund des zusätzlich vorgesehenen Energieeinbringungselements 19 kann die über die Wärmerückführung 16 vom Kühlaggregat 13 rückgeführte Wärme zum Verdampfungsraum 12 im laufenden Betrieb eventuell sogar als einzige Energiezufuhr an dieser Stelle ausreichen. Lediglich für die Inbetriebnahme muss dem Verdampfungsraum dann externe Wärme zugeführt werden; oder in den Hohlraum 11 wird bei Inbetriebnahme zunächst nicht-gasförmiges Trägermedium eingesprüht, so dass es zu Beginn erst in dem Hohlraum 11 selber in Dampf umgewandelt wird. Das erwärmte Transportmedium kann das Trägermedium zusätzlich oder alternativ aber auch an anderer Stelle erwärmen, beispielsweise über das Element 19.

Das Trägermedium weist nun aufgrund der überwundenen Höhe h₁-h₀ eine eingeprägte potentielle Energie auf. Es wird durch das Fallrohr 14 nach unten fallen gelassen, so dass aus der potentiellen Energie kinetische Energie gewonnen wird (Schritt 24).

Diese kinetische Energie lässt sich nun in eine andere, gewünschte Energieform umwandeln (Schritt 25). Beispielsweise kann das fallende Trägermedium die Turbine 15 antreiben, und die entstehende Rotationsenergie kann dann genutzt werden, um den angeschlossenen Generator zu betreiben und elektrische Energie zu erzeugen.

In dem Bereich vom Kompressor 101 bis zur Turbine 15 unterliegt das Trägermedium einem erhöhten Druck, was in Figur 1 durch gepunktete Flächen veranschaulicht ist. In dem Trägermedium ist aufgrund dieses Drucks somit zusätzliche Energie gespeichert. Die Turbine 15 kann daher so ausgelegt sein, dass sie zusätzlich durch die Dekompression des sie erreichenden Trägermediums angetrieben wird.

Nachdem das Trägermedium die Turbine 15 angetrieben hat, kann es dann abgekühlt und wieder auf dem ursprünglichen Druckniveau in den Verdampfungsraum 12 geleitet werden (Schritt 26). Das ursprünglichen Druckniveau kann dabei dem Umgebungsdruck entsprechen, oder einem erhöhten Druckniveau, das es erlaubt, die Vorrichtung aufgrund des so reduzierten Volumens des gasförmigen Mediums kompakter zu gestalten.

Das optionale Aufwindkraftwerk 17 kann den aufsteigenden Dampf aus dem Trägermedium zwischen Schritt 20 und Schritt 21 zusätzlich in konventioneller Weise zur Energiegewinnung nutzen.

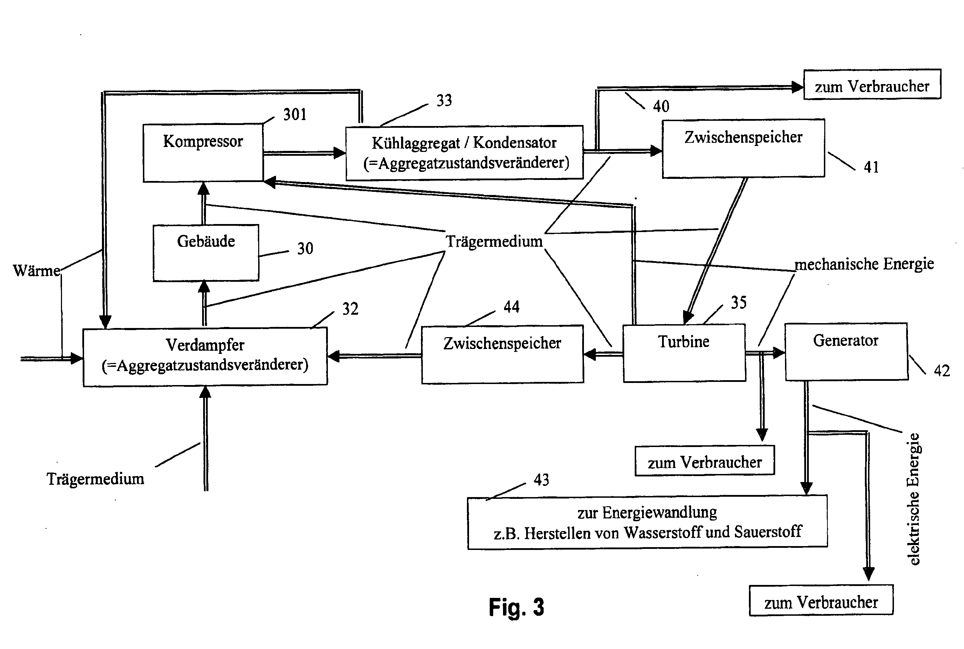

Einige ausgewählte Details und Variationsmöglichkeiten der Vorrichtung aus Figur 1 sind in dem in Figur 3 gezeigten Blockschaltbild dargestellt.

Einem Verdampfer 32, oder allgemeiner einem Aggregatszustandveränderer, wird ein Trägermedium zugeführt. Das Trägermedium kann beispielsweise Meerwasser sein. Der Verdampfer 32 entspricht dem. Verdampfungsraum 12 in Figur 1. In dem Verdampfer 32 wird das Trägermedium mittels zugeführter Wärmeenergie verdampft.

Der Dampf steigt in dem Hohlraum eines Gebäudes 30 auf, bis es einen Kompressor 301 erreicht. Der Hohlraum kann zusätzlich ein Füllmedium enthalten, das in einem offenen oder einem geschlossenen Kreislauf von dem Trägermedium mitgenommen wird. Der Kompressor 301 komprimiert das Trägermedium.

Das weiterhin gasförmige Trägermedium steigt weiter auf und erreicht einen zweiten Aggregatszustandsveränderer 33. Der zweite Aggregatszustandsveränderer 33 kann beispielsweise dem Kühlaggregat 13 aus Figur 1 entsprechen, der als aktiver Kondensatsammler zur Unterstützung der Kondensierung eine Kühlung des Dampfes mittels eines Kühlkreislaufs bewirkt. Die aufgenommene Wärme wird über eine Wärmerückführung dem Verdampfer 32 zugeführt.

Sollen Verdampfung und Kondensation zur Destillation des Trägermaterials eingesetzt werden, so kann zumindest ein Teil des kondensierten Trägermediums über einen Entnahmeanschluss 40 direkt einem Verbraucher zugeführt werden. Ist das Trägermedium zum Beispiel Meerwasser, so fällen die enthaltenen Salze bei der Verdampfung aus, und ein Teil des kondensierten Trägermediums kann als Trinkwasser oder zur Bewässerung genutzt werden.

Der nicht entnommene Teil des kondensierten Trägermediums wird einem Zwischenspeicher 41 zugeführt, beispielsweise einem Wassertank, der ebenfalls im Wesentlichen auf der Höhe des zweiten Aggregatzustandsveränderers 33 angeordnet ist. Die Zwischenspeicherung erlaubt eine Gewinnung der gewünschten Energieform zu einer gewünschten Zeit. Dies schließt auch eine verstärkte Gewinnung der gewünschten Energieform zu Spitzenlastzeiten ein, und/oder eine zeitlich gleichmäßige Verteilung der Gewinnung der gewünschten Energieform, wenn die zugeführte Wärmeenergie etwa nur zu bestimmten Zeiten zur Verfügung steht und daher nur zu bestimmten Zeiten Kondensat gewonnen werden kann.

Das kondensierte Trägermedium wird dann bedarfsmäßig gesteuert durch ein Fallrohr fallengelassen, so dass es auf eine Turbine 35 auftritt und diese antreibt. Zusätzlich kann eine Dekompression des Trägermediums genutzt werden um die Turbine 35 anzutreiben. Es versteht sich, dass die Turbine 35 oder eine weitere Turbine nur zur Nutzung der Dekompressionsenergie auch auf der Höhe des zweiten Aggregatzustandsveränderers 33 angeordnet sein könnte. Die Turbine 35 kann mechanisch mittels Achse und Getriebe mit dem Kompressor 301 gekoppelt sein und diesen somit antreiben um das Trägermedium zu komprimieren.

Darüber hinaus kann die von der Turbine 35 erzeugte Rotationsenergie kann entweder direkt von einem Verbraucher genutzt werden, und/oder einem Generator 42 zur Erzeugung elektrischer Energie zugeführt werden. Die elektrische Energie kann wiederum entweder direkt einem Verbraucher zugeführt werden, oder aber für eine weitere Energieumwandlung 43, wie zur Herstellung von Wasserstoff oder Sauerstoff, eingesetzt werden.

Nachdem das kondensierte Trägermedium die Turbine 35 angetrieben hat, kann es in einem weiteren Zwischenspeicher 44 zwischengespeichert werden, um dann erneut in einem geschlossenen Kreislauf dem Verdampfer zugeführt zu werden. Es versteht sich, dass eine Entnahme von destilliertem Trägermedium über einen Entnahmeanschluss auch vor oder nach dem zweiten Zwischenspeicher 44 erfolgen kann, damit für das Antreiben der Turbine eine größere Menge an Trägermedium zur Verfügung steht.

Das die Turbine 35 verlassende und im Zwischenspeicher 44 gespeicherte Trägermedium weist die geringste Temperatur von Trägermedium in dem System auf, und stellt somit einen Kältepol dar. Das Transportmedium aus dem Kühlkreislauf mit Kühlaggregat 33 und Wärmerückführung kann beispielsweise an dieser Stelle mittels des Trägermediums auf seine Vorlauftemperatur gebracht werden. Das Transportmedium kann dort zum Beispiel mittels Wärmetauscher gekühlt werden oder durch das Trägermedium ausgetauscht werden.

Aufgrund der erhöhten Wärmeenergie, die von dem Kühlkreislauf in dem Kühlaggregat aufgenommen werden kann, ist eine Wärmepumpe generell nicht mehr erforderlich. Der Einsatz einer Wärmepumpe ist jedoch in einigen Ausführungsbeispielen weiterhin möglich, zum Beispiel zum Austausch von Wärme zwischen Transportmedium und Kältepol, oder zum Einstellen der Temperatur des Kältepols.

Soweit dem Kreislauf kondensiertes Trägermedium entnommen wurde, wird es dem Verdampfer 32 zusätzlich von extern wieder zugeführt, zum Beispiel in Form von weiterem Meerwasser.

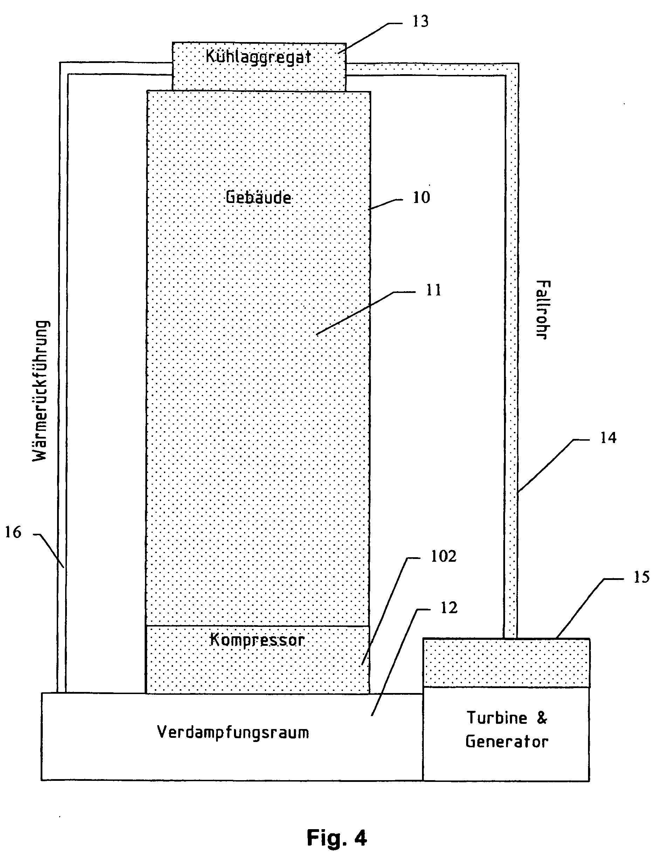

Figur 4 zeigt eine weitere Abwandlung der Vorrichtung aus Figur 1 als weiteres Ausführungsbeispiel einer erfindungsgemäßen Vorrichtung zur effizienten Umwandlung von Energie. Gleiche Komponenten wurden mit den gleichen Bezugszeichen wie in Figur 1 versehen.

In diesem Ausführungsbeispiel sind ein Verdampfungsraum 12, ein Gebäude 10 mit einem Hohlraum 11, ein Kühlaggregat 13, ein Fallrohr 14, eine Turbine 15 und eine Wärmerückführung 16 wiederum wie in dem Beispiel aus Figur 1 angeordnet.

In der Ausformung entsprechend Figur 4 ist jedoch kein Element 19 zur Wärmeenergiegewinnung und -einspeisung entlang der Hülle des Hohlraums angeordnet, obwohl dieses auch hier vorgesehen sein könnte.

Der wesentliche Unterschied zu dem Ausführungsbeispiel aus Figur 1 besteht darin, dass zwar ebenfalls ein Kompressor 102 vorgesehen ist, dass dieser aber nun zwischen Verdampfungsraum 12 und Gebäude 10 angeordnet ist.

Die Vorrichtung aus Figur 4 arbeitet im Wesentlichen wie die Vorrichtung aus Figur 1. In diesem Fall wird lediglich das Trägermedium bereits unmittelbar nach der Umwandlung in ein gasförmiges Trägermedium komprimiert. Das bereits komprimierte gasförmige Trägermedium steigt im Hohlraum 11 im Gebäude auf, bis es das Kühlaggregat erreicht. Hierdurch kann das Gebäude für den gleichen Durchfluss an Trägermedium wie in Figur 1 einen geringeren Durchmesser aufweisen. 1.

Es versteht sich, dass eine beliebige andere Anordnung des Kompressors zwischen den beiden in Figur 1 und 4 dargestellten Positionen ebenso möglich ist.

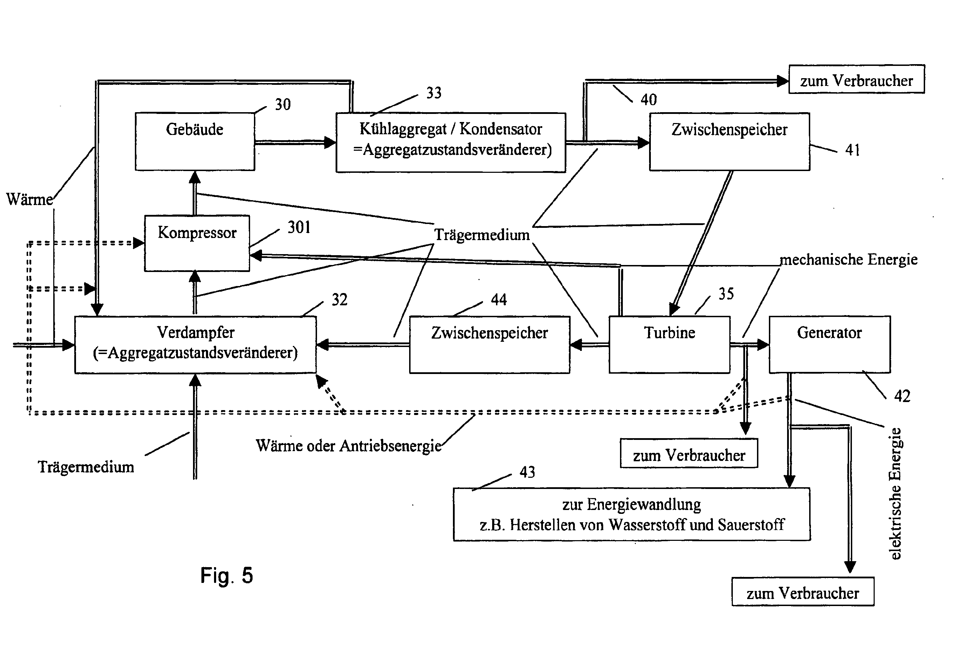

Einige ausgewählte Details und Variationsmöglichkeiten der Vorrichtung aus Figur 4 sind in dem in Figur 5 gezeigten Blockschaltbild dargestellt.

Die Darstellung in Figur 5 entspricht weitgehend der Darstellung in Figur 3, auf deren Beschreibung verwiesen wird.

In Figur 5 ist jedoch der Kompressor 302 ähnlich wie in Figur 4 zwischen dem Verdampfer 32 und dem Gebäude 30 angeordnet.

Neben der optionalen mechanischen Rückkopplung zwischen der Turbine 35 und dem Kompressor 302 sind außerdem weitere mögliche systeminterne Rückkopplungen durch gestrichelte Linien angedeutet.

So kann beispielsweise eine Erzeugung von Heizwärme mittels mechanischer, von der Turbine 35 gelieferter Energie oder mittels elektrischer, vom Generator 42 gelieferten Energie vorgesehen werden. Die mechanische Erzeugung von Wärme kann etwa mittels Reibung erfolgen. Diese Wärme kann dann an einer oder mehreren Stellen des Systems in das Trägermedium eingespeist werden. Ein Beispiel ist eine Einspeisung der Wärmeenergie in den Verdampfer 32. Alternativ oder zusätzlich kann beispielsweise vom Generator 42 gelieferte elektrische Energie genutzt werden, um den Kompressor 302 oder andere strombetriebene Komponenten der Vorrichtung zu betreiben.

In anderen Worten lassen sich einige mögliche Details der Erfindung wie folgt beschreiben, wobei in diesen Ausführungen Kompressionsmittel zwar nicht erwähnt sind, aber jeweils ähnlich wie der Kompressor in Figuren 1, 3, 4 oder 5 vorgesehen sind:
Das Verfahren und / oder die Vorrichtung gemäß des Erfindung basiert auf dem Einsammeln und Umsetzen von Wärmeenergie über den Umweg der Umwandlung potentieller Energie im Schwerefeld einer Masse (*Eₚₒₜ = m*g*h; ,m'* die in die Höhe gehobene Masse in Kilogramm, '*g*' die Gravitationskonstante und '*h*' die Höhe) in Energie und / oder Energieträger, die wir Menschen zur Gestaltung unserer Umwelt benötigen oder zu benötigen glauben.

Die Physik, die hier zum Umwandeln von Energie ausgenutzt wird, ist gegeben durch das Einbringen von Energie in eine Änderung des Aggregatzustandes fest und / oder flüssig in den Aggregatzustand gasförmig und wieder zurück, sowie durch die Gasdynamik in Form der adiabatischen Expansion, die nach Änderung des Aggregatzustandes in die Gasform stattfindet. Aus der adiabatischen Expansion ergibt sich ein Kamineffekt, der in diesem Verfahren und / oder Vorrichtung eine Rolle spielt. Letztendlich ergibt sich daraus eine Wandlung von Energie in Form von Wärme in im Schwerefeld gespeicherte Energie, die dann wiederum in andere Energieformen umgewandelt werden kann und / oder wird.

Dieses Verfahren und / oder die Vorrichtung ist vom Grundprinzip her eine "Heat pipe" allerdings mit entscheidenden Veränderungen und Erweiterungen. Diese ist derart im Schwerefeld der Masse angeordnet, dass für eine Bewegung von ihrem einen Ende zu ihrem anderen Ende (= Höhe h) Energie für die Überwindung einer Differenz im Potential des Schwerefeldes aufgewandt werden muss. Beispielhaft übertragen auf den Fall ,Erde' bedeutet dies: Das eine Ende befindet sich z.B. auf dem Erdboden (Höhe *h₀* = 0) und das andere Ende befindet sich in einer Höhe *h₁* > 0 über dem Erdboden.

Das funktionale Grundprinzip nach dem das Verfahren und / oder die Vorrichtung abläuft lässt sich wie folgt beschreiben (Fig.3):
Ein Stoff (= Trägermedium) wird mittels von außen eingeprägter Energie in den gasförmigen Aggregatzustand überführt, dann durch den die tragende Rolle spielenden physikalischen Effekt der adiabatischer Expansion auf die Höhe *h* gefördert und dort in den vorhergehenden Aggregatzustand zurückversetzt (=kondensiert). Danach steht der Stoff mit eingeprägter potentieller Energie für die Energiegewinnung zur Verfügung. Optional kann er dort in dieser Höhe für eine spätere Nutzung zwischengespeichert werden. Die potentielle Energie kann dann mittels entsprechender Vorrichtungen und / oder Verfahren in andere physikalische wie chemische Energieformen umgewandelt werden, d.h. dem Trägermedium entnommen werden. Nach der Entnahme der potentiellen Energie kann der Stoff optional wiederum zwischengespeichert werden. Danach kann dann optional, wenn in der entsprechenden Ausführungsform geplant, das Trägermedium in den Kreislauf wieder eingespeist werden.

Zur Umsetzung des Verfahrens und / oder der Vorrichtung wird in einer Ausführung ein Kreislauf mit folgenden Elementen dargestellt (siehe auch Fig.1):
Ein Verdampfungsraum zum Verdampfen eines Trägermediums mittels der eingeprägten äußeren Wärme, daran angeschlossen ein Gebäude einer Höhe *h*, in dem der Dampf aufsteigen kann und in das auch ein Aufwindkraftwerk eingefügt werden kann, daran angeschlossen in einer Ausführungsform ein Kühlaggregat (=eine Kühlvorrichtung) zum Gewinnen von Kondensat aus dem Dampf des Trägermediums, in einer anderen Ausführungsform wird die Höhe *h* so ins Verhältnis zu der in das Trägermedium eingeprägten Wärme gesetzt, dass die Abkühlung durch die Aufwärtsbewegung (das ist der physikalische Vorgang des Umwandelns der Wärme (= mikroskopische Bewegung) in die makroskopische Bewegung, das ist die gleichgerichtete Bewegung der Moleküle/Atome - der Kamineffekt) einen soweit unterkühlten Dampf generiert, dass im besten Fall Autokondensation einsetzt und ein Kühlaggregat nicht nötig ist, daran schließt / schließen sich dann in einer Ausführung Kondensatsammler / Kondensatoren z.B. in Form von Netzen an, die als große Kollisionsoberfläche dienen, um einen Kondensationsnebel / Kondensat zu erzeugen bzw. weiter zu verdichten, daran nicht notwendigerweise angeschlossen eine Zwischenspeichervorrichtung für das Kondensat (notwendig z.B. für den Fall des Ausbleibens der äußeren Wärme, oder aber um Spitzenabforderungen abzudecken, oder aber um Spitzen in der Kondensatzulieferung abzupuffern), daran angeschlossen ein Fallrohr für das Kondensat, daran angeschlossen eine Turbine mit angeschlossenem Generator, in der die aus der potentiellen Energie des Kondensats des Trägermediums über den Fall im Fallrohr gewonnene kinetische Energie in z.B. elektrische Energie umgesetzt werden kann (kann wiederum auch direkt in Wärme umgewandelt werden), daran nicht notwendigerweise angeschlossen eine weitere Zwischenspeichervorrichtung für das Kondensat, und daran angeschlossen wieder der Verdampfungsraum. Hierbei kann die im Kühlaggregat anfallende Wärme wiederum über ein Transportmedium in die Aufheizung im Verdampfungsraum eingebracht werden.

Zur Umsetzung des Verfahrens und / oder der Vorrichtung sind verschiedene Ausführungen möglich. In dem bisher beschriebenen Verfahren und / oder Vorrichtung ist das Trägermedium nicht notwendigerweise bis auf Verunreinigungen das einzige Gas innerhalb des Gebäudes der Höhe *h*, in einer weiteren Ausführung ist das Gebäude der Höhe h zusätzlich mit einem Füllmedium (vornehmlich Luft, aber auch jegliches andere Gas / Gasgemisch ist nutzbar) geflutet. Die Option eines Füllmediums ergibt sich durch Druckunterschiede zwischen den Innenräumen des Verfahrens und / oder der Vorrichtung und der äußeren Umgebung bei verschiedenen Betriebstemperaturen, welche durch Änderungen von Aggregatzuständen hervorgerufen werden. Diese können optional durch Füllmedien ausgeglichen werden, woraus sich konstruktive Maßnahmen für das Auslegen der baulichen Objekte ergeben. Hieraus ergeben sich nun, da das Füllmedium durch das Trägermedium mitgenommen wird, mindestens zwei Ausführungen. Zum einen ein geschlossener Kreislauf für das Füllmedium, welches durch eine Rückführungsvorrichtung nach Entfernen des Trägermediums in der Höhe h wieder im Verdampfer zur Verfügung gestellt wird und zum anderen ein offenes System, wo das Füllmedium von außen durch die Mitnahme innerhalb des Gebäudes angesaugt wird und nach Nutzen wieder nach außen entlassen wird.

Aus weiterem Betrachten des Verfahrens und / oder der Vorrichtung ergibt sich ein weiterer Nutzen. Als Nebeneffekt des Änderns des Aggregatzustandes eines genutzten Stoffes ergibt sich je nach Zusammensetzung desselben eine fraktionierte Destillation. Wird z.B. Meereswasser als Trägermedium in einem offenen Durchlauf in dem Verfahren und / oder der Vorrichtung eingesetzt, so verdampft vereinfacht dargestellt Wasser, gelöste Gase werden frei und Salze fällen aus. Im Kondensationsbereich in der Höhe *h* steht dann vornehmlich reines Wasser zur Verfügung, welches ja mittels der gewonnenen Energie bereits ohne weitere Zwischenschritte auf die Höhe h gepumpt wurde. Hieraus ergeben sich wieder vielfältige Anwendungen und Ausführungen (Stichworte: (Trink-)Wassergewinnung, Bewässerung). Wird z.B. Brauchwasser oder Abwasser aus Industrie oder Haushalten genommen, so resultiert das Verfahren in einer Brauchwasser oder Abwasserreinigung, sowie einer Gewinnung der Reststoffe.

In weiteren Ausführungsformen wird optional speziell auf die Verdampfungswärme oder Verdampfungsenthalpie des jeweiligen Trägermediums eingegangen, die als latente Wärme bei der Aggregatzustandsänderung von flüssig / fest nach gasförmig aufgebracht werden muss, dann aber beim reversen Übergang bezeichnet mit Sublimations- oder Kondensationswärme wieder frei wird. Selbige wird optional durch den oben bereits beschriebenen Rücktransport mittels Kühlaggregat wieder in den Bereich der Aggregatzustandsänderung von flüssig / fest nach gasförmig eingebracht (s. Fig.3). Dies führt dazu, dass während des Betriebes von außen in den Verdampfer nur die Verlustenergien zusätzlich eingebracht werden müssen. Dazu gehört ja auch die entnommene Nutzenergie. Insgesamt haben diese Ausführungsformen den Vorteil eines deutlich kleineren baulichen Aufwandes für das Gewinnen der Energie.
In einer weiteren Ausführungsform werden die oben genannten Netze durch konstruktive Auslegung und Anordnung von den Kühlbereichen des Kühlaggregats dargestellt, wie z.B. Netze aus Schläuchen, durch die ein Kühlmittel (=Transportmedium) fließt.

In einer weiteren Ausführungsform wird die Rückgewinnung der Verdampfungswärme und damit die Kondensation durch einsprühen / einregnen / einbringen des Kondensats, welches in einer weiteren Ausführungsform vorher durch das Kühlaggregat gekühlt wurde, verbessert. In weiteren Ausführungsformen kann das Kondensat auch durch Stoffe, die den selben physikalischen Effekt bewirken ersetzt werden. (Beispiel: Im Fall eines Trägermediums Wasser könnte der eingebrachte Stoff zur Verbesserung der Kondensation auch ein Öl sein. Dies hätte den Vorteil einer einfachen Separation beider Stoffe.).

Für alle Stoffe (Trägermedium(en), Transportmedium(en)), Füllmedium(en), Energien (Wärme(en), elektrische Energie(en), mechanische Energie(en), Wind(e), Bewegungsenergie(en)) und Aggregatzustände im Verfahren und / oder der Vorrichtung bieten sich konstruktive Lösungen mit geschlossenen Kreisläufen, wie offenen Durchläufen an.

Die Transportmedien, die in diesem Verfahren und / oder Vorrichtung genutzt werden, erfüllen, wie z.B. Katalysatoren in chemischen Reaktionen, nur funktionale Hilfsaufgaben, die aber wiederum für die Darstellung der jeweiligen Ausführungsform funktional notwendig sind. Z.B. wird die Rückführung der im Kühlaggregat gewinnbaren Wärme über einen optional geschlossenen Kreislauf eines Transportmediums zurück in den Verdampfer organisiert. Auch kann das Transportmedium in diesem Prozess einem Wechsel des Aggregatzustandes unterliegen, muss dies aber nicht. Dies wäre der Fall, wenn dieser Teil einer Ausführungsform ebenso als "Heat pipe" ausgeführt wird. In einer anderen Ausführungsform wird als Wärmetransportmedium, z.B. eine höher siedende Flüssigkeit (z.B. pflanzliches oder mineralisches Öl, eine Salzschmelze o.ä.), ein Gas eingesetzt, das seinen Aggregatzustand unter Einbringung der im Kühlaggregat gewonnenen Wärme nicht ändert.

Die Wärmeenergie, die dieses Verfahren und / oder die Vorrichtung antreibt, kann aus beliebigen Quellen entnommen werden. So z.B. Erde (Erdwärme), Wasser (Wärme des Wassers), Luft (Wärme der Luft), Fossile Energieträger (Gas, Öl, Kohle, Methaneis etc.), Kernenergieträger (Fusion oder Spaltung) oder Sonne (Sonnenenergie).

In weiteren Ausführungsformen fällt das Gebäude der Höhe h (=der Kamin) mit der Vorrichtung zur Energie- / Wärmegewinnung zusammen, was den Aufwand und damit die Bau- und Erschließungskosten drastisch senkt. Physikalisch / technischer Hintergrund dazu ist die Überlegung, dass die zum Höhentransport mittels Kamineffekt notwendige Energie für das Trägermedium ja nicht unbedingt bereits im Verdampfungsraum (Fig. 1) also konzentriert (Folge: hohe Temperaturen nötig) eingebracht werden muss, sondern auch verteilt über den Höhenverlauf des Gebäudes der Höhe h eingebracht werden kann (Folge: nur niedrige Temperaturen nötig. D.h. nur so viel pro Höhenmeter heizen wie unbedingt nötig). Wird also die Vorrichtung z.B. im Falle eines Solarkollektors derart ausgeführt, so fallen Kollektor und Gebäude der Höhe h zusammen. In jedem anderen Fall, in dem ebenso nur niedrige Ausgangstemperaturen für die Verdampfungs- bzw. Transportenergien vorliegen gilt analoges. Also ergibt sich auch für diese Ausführungsformen der grundlegende Verfahrensablauf mit den folgenden Stationen: Die des Verdampfens - mit nicht notwendigerweise genügender Transportenergie zum überbrücken der Höhe h, die des Einbringens von Energie (Wärme) zwecks des Transports des Trägermediums zum Gewinnen der potentiellen Energie und ausgleichen der Verluste, die des Kondensierens und Rückgewinnens latenter Energien (selbige latente Energien sind die Verdampfungswärme, wie auch die Wärme des Trägermediums) nach erreichen der Höhe h, selbige werden dann wieder in die Verdampfung eingespeist, wie auch die des Gewinnens der Nutzenergie und die des Rückführens des Trägermediums in den Verdampfer. Auch hier sind alle bereits oben genannten Ausführungen Zwecks Gewinnen von Trinkwasser oder Abwasserreinigung etc., sowie offene und / oder geschlossene Kreisläufe möglich (siehe auch Fig. 3).

Die Energie und / oder Energieträger, die wir Menschen zur Gestaltung unserer Umwelt benötigen oder zu benötigen glauben, können z.B. elektrische Energie oder chemische Energieträger oder physikalische Energieträger wie z.B. Wasserstoff und Sauerstoff aus einer Elektrolyse sein, oder auch Pumpenergie, wie Energie zur Destillation.

Vorteil dieses Verfahrens und / oder der Vorrichtung ist im Falle des Nutzens der Eingangsenergieträger wie Erdwärme, Wärme der Luft oder des Wassers sowie der Sonnenenergie die absolute Emissionsfreiheit an den die Umwelt verschmutzenden Stoffen.

Zur Abgrenzung:
- Das hier vorgestellte Verfahren und / oder die Vorrichtung ist kein Aufwindkraftwerk (Aufwindkraftwerke gehören zur Gruppe der Thermikkraftwerke, so wie dieses hier vorgestellte Verfahren und / oder die Vorrichtung). Ein Aufwindkraftwerk ist ein nicht notwendiger Bestandteil dieses hier vorgestellten Kraftwerks.
- Das hier vorgestellte Verfahren und / oder die Vorrichtung ist kein Meereswärmekraftwerk. Die Wärme des Meerwassers ist lediglich eine Lösung zur Gestaltung der Energiequelle.
- Das hier vorgestellte Verfahren und / oder die Vorrichtung ist kein Geothermiekraftwerk. Die Wärme der Erde ist lediglich eine weitere Lösung zur Gestaltung der Energiequelle.

Im Fall der Nutzung von Erdwärme als Quellenergie kann daran gedacht werden, bestehende Schachtanlagen - z.B. im Ruhrgebiet - zu nutzen. Damit ließen sich die Anfangskosten für die Entwicklung minimieren und zugleich die Bauzeit bis zur ersten Inbetriebnahme verkürzen. Dabei würde die Wärmegewinnung z.B. in den Stollen geschehen und die Schächte wären die Gebäude der Höhe *h*, und ebenerdig besteht dann zusätzlich die Möglichkeit eines Speichersees für das Kondensat, was als Funktion "Speicherkraftwerk" zur Steuerung und Bedienung der Spitzenlastverteilung dienen kann.

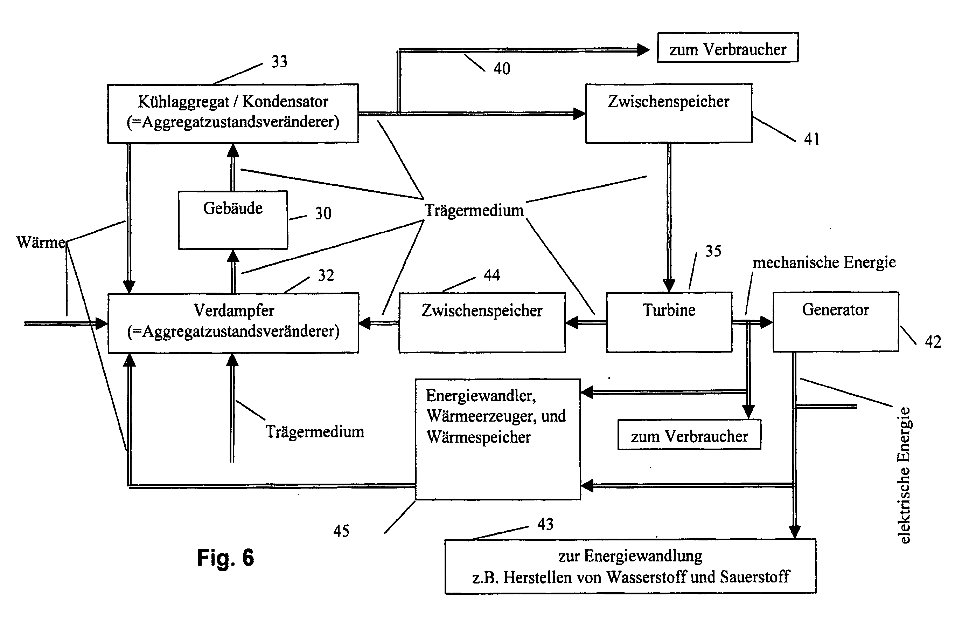

Figur 6 veranschaulicht schematisch den Aufbau einer weiteren Vorrichtung. Die Vorrichtung entspricht der mit Bezug auf Figur 3 beschriebenen Vorrichtung. Es wurde jedoch ein Element zur Energiewandlung, Wärmeerzeugung und Wärmespeicherung 45 - angeordnet zwischen Turbine 35 und/oder Generator 42 einerseits und Verdampfer 32 andererseits - ergänzt. Eine solche Vorrichtung ist beispielhaft für folgende Ausführungen:
In einer weiteren Ausführungsform des Verfahrens und / oder der Vorrichtung wird die durch das Verfahren und / oder Vorrichtung gewonnene Energie in Form von Wärme in einen Speicher eingebracht (Fig. 6)(45). Daraus ist die Wärme bei Bedarf wieder in den Kreislauf einbringbar. Dieser Wärmespeicher kann als Speichermedium in diversen Ausführungsformen z.B. Eisen oder ein anderes Metall haben oder aber einfach aus Stein (z.B. Basalt, Granit, Marmor, Schamott etc.), oder aber aus einer Flüssigkeit wie z.B. einer Salzlake, einer Salzschmelze oder aber einer Metallschmelze bestehen.

Vorteil dieser Art der Zwischenspeicherung ist die erreichbare viel höhere Energiedichte im Vergleich zur Speicherung von Trägermedium und damit Gewicht auf großer Höhe und daraus ergibt sich ein deutlich geringerer Aufwand. Zugleich ergibt sich dadurch die Möglichkeit der permanenten Wärmezufuhr in den Verdampfungsprozess, was in einigen Ausführungsformen dazu führt, dass kein Unterdruck im Gebäude entsteht; auch dies ergibt etliche bauliche Vorteile.

Am Beispiel von 365 Wärmespeichern aus Basalt (0,84 kJ/kg*K, 3000 kg/m³), die um 600°C erwärmt werden und ein Volumen von jeweils 300x300x300 m³ haben zeigt sich die Kapazität dieses Verfahrens. Die hierin gespeicherte Wärmemenge ergibt sich zu 15.000 Peta Joule, was aufgerundet dem Jahresbedarf der Bundesrepublik Deutschland an Primärenergie im Jahr 2005 entspricht. Diese Wärmemenge ist mittels des hier dargestellten Verfahrens und / oder der Vorrichtung erzeugbar und wieder abrufbar zwecks Nutzung in anderen Energieträgern.

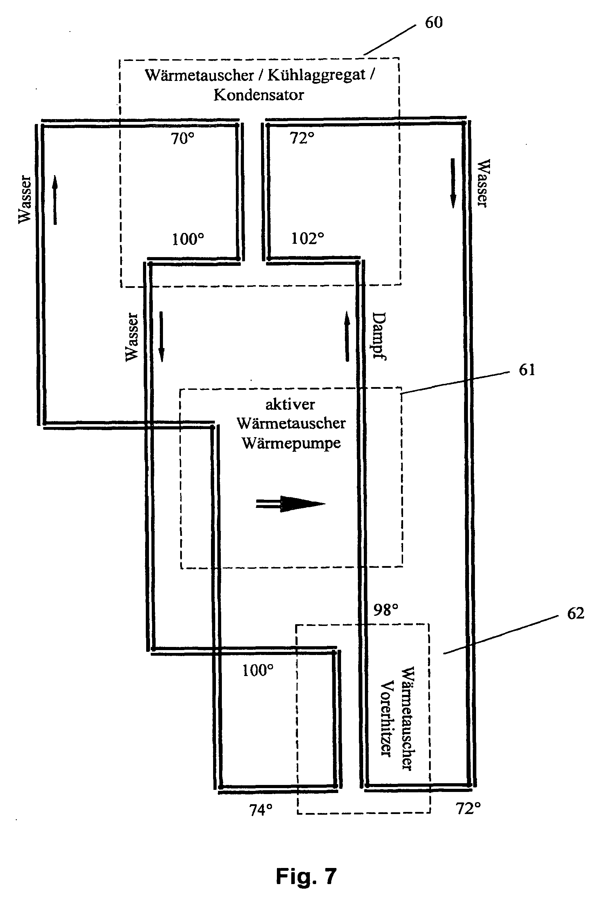

In einer weiteren Ausführungsform des Verfahrens und / oder der Vorrichtung wird der Wärmerücktransport, wie das erneute Einbringen der Verdampfungswärme und optional auch das erneute Einbringen der Grundwärme des Trägermediums, durch jeweils einen Wärmetauscher realisiert. Diese sind jeweils über Leitungen sinnvoll miteinander verbunden (Fig. 7). Also: Der eine Wärmetauscher sammelt die Energien aus dem Dampf bzw. dem Kondensat des Trägermediums ein - dieser ist das Kühlaggregat - und überträgt diese in das Transportmedium. Der Andere gibt diese eingesammelte Energie im Verdampfer wieder an das Trägermedium zwecks verdampfen ab - dieser ist dann der Verdampfer. Diese Wärmetauscher können in verschiedenen Ausführungsformen passiv (= Gegenstrom-, Mitstrom-, Kreuzstromwärmetauscher) und/oder aktiv (= Wärmepumpe) sein.

Wenn in einer Ausführungsform für den Wärmetransport bevorzugt passive Wärmetauscher eingesetzt werden, dann muss, da passive Wärmetauscher nicht ideal sind, in einer Ausführungsform mindestens ein weiterer aktiver Wärmetauscher für die Übertragung der von den passiven Wärmetauschern nicht übertragenen Restwärme zwecks Übertragung dieser in den Verdampfungsprozess integriert werden, oder aber es wird in einer weiteren Ausführungsform diese Restwärme durch einen Wärmetauscher an die Umgebung des Verfahrens und / oder der Vorrichtung zum Gewinnen von Energie abgegeben und muss dann durch eine um diesen Betrag vergrößerte externe Energiezufuhr in den Verdampfungsprozess wieder ausgeglichen werden. Das integrieren dieses aktiven Wärmetauschers geschieht sinnvoller, aber nicht notwendigerweise am Ort des Verdampfers, wo die Übertragungswege dieser Restwärme in den Verdampfungsprozess kurz sind.

Ein Beispiel (Fig.7) verdeutlicht den Wärmefluss: Angenommen die Wärmetauscher sind Gegenstromwärmetauscher und Trägerwie Transportmedium ist Wasser und die Vorlauftemperatur des Transportmediums in den Kühler (60) beträgt 70°C und die Abströmtemperatur 100°C, die Temperatur des Dampfes des Trägermediums am Vorlauf des Gegenstromes 102°C und am Abstrom 72°C, so beträgt die Vorlauftemperatur des Transportmediums in den Verdampfer 100°C und die wiederum trifft auf ein Trägermedium von 72°C. Sei nun dieser passive Gegenstromwärmetauscher des Verdampfers (62) ähnlich dem des Kühlers ausgelegt. Dann liegt am Abstrom ein Trägermedium von 98°C vor und ein Transportmedium von 74°C. Zugleich kann dieser passive Wärmetauscher aber nur einen Bruchteil der im Transportmedium zwischengespeicherten Energie abführen und so muss, um für den Kühler wieder die für den Betrieb notwendige Vorlauftemperatur von 70°C zu erreichen die restliche Wärme aktiv abgeführt und damit die Temperatur des Transportmediums noch um 4°C gesenkt werden. Dies geschieht dann mittels einer Wärmepumpe (61) (= Prinzip des Kühlschranks) wobei die Wärme sinnvollerweise derart gepumpt wird, dass sie wieder zwecks Verdampfen in den Verdampfungsprozess einfügbar ist.

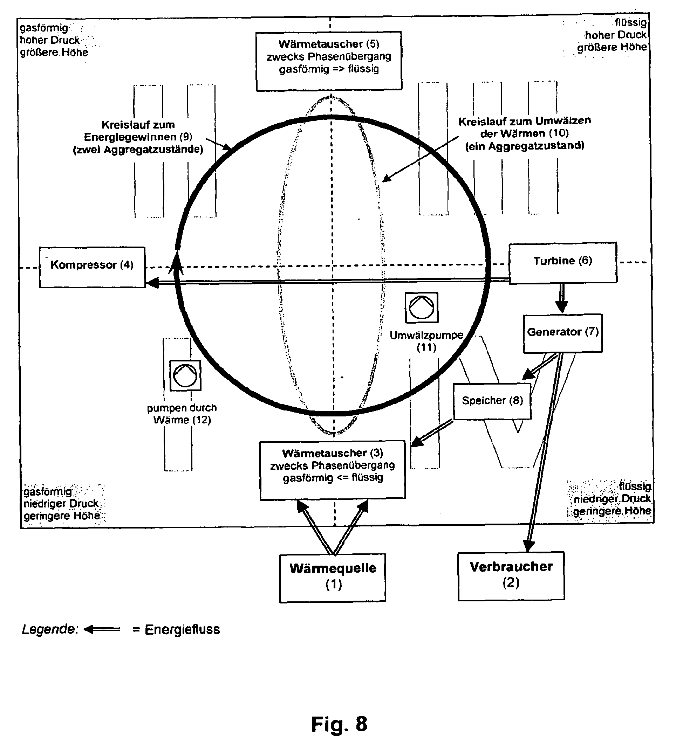

Figur 8 zeigt das technisch physikalische Prinzip des vereinfachten Systems, Verfahrens und / oder Vorrichtung gemäß der Erfindung in Form eines Quadrantendiagramms, in dem die Funktionsgruppen im Wesentlichen als Übergänge zwischen den Quadranten dargestellt sind. Ausnahmen sind die externe Energiezufuhr in Form von Wärme (Fig.8 (1)) und der Verbraucher (Fig.8 (2)), die außerhalb des eigentlichen Kernbereichs des Systems Verfahrens und / oder Vorrichtung liegen. Des Weiteren der Generator (Fig.8 (7)), der Speicher (Fig.8 (8)) und die Umwälzpumpe für das Transportmedium (Fig.8 (11)), die Wärmerückgewinnung, wie die Kernpumpe des Systems, Verfahrens und / oder Vorrichtung, die eigentliche Antriebspumpe, die Wärme (Fig.8 (12)), die das Trägermedium im Kreislauf zum Energiegewinnen (Fig.8 (9)) in den Funktionsquadranten I und II an- bzw. auftreibt.

Die erste zu beschreibende Funktionsgruppe ist der Wärmetauscher (Fig.8 (3)), der den Phasenübergang des Trägermediums hier von flüssig nach gasförmig bewirkt und durch seine Anordnung und Funktion den Zustand gasförmig bei niedrigem Druck auf geringer Höhe darstellt (Quadrant I). Der Kompressor (Fig.8 (4)) dient nun dazu den Druck und damit das Volumen, wie die Temperatur des gasförmigen Trägermediums zu erhöhen. Er bildet damit den Übergang von Quadrant I auf II, in dem dann das Trägermedium weiterhin gasförmig bei höherer Temperatur ist und in dem es auf eine größere Höhe durch die Antriebspumpe gelangt. Darauf wird dem gasförmigen Trägermedium im Wärmetauscher (Fig.8 (5)) die Wärme entzogen und damit der flüssige Aggregatzustand wieder hergestellt. Diese Wärme, die ja die Verdampfungswärme auf höherem Temperaturniveau, wie die Grundwärme des Trägermediums beinhaltet, wird über den Umwälzkreislauf der Wärmen (Fig.8 (10)) mittels des Transportmediums dem Verdampfungsprozess im Wärmetauscher (Fig.8 (3)) wieder zur Verfügung gestellt. Die nun so gewonnene herunter gekühlte Flüssigkeit wird im Funktionsquadranten III aus der größeren Höhe der Turbine (Fig.8 (6)) zugeführt, die ja auf niedrigerer Höhe angebracht ist und in der die im Druck vorliegende Energie in mechanische Energie umgewandelt wird. Der Druck an der Turbine setzt sich dabei aus der Druckerhöhung, die durch den Kompressor gegeben ist und dem durch die Höhendifferenz gegeben Druck zusammen. Die so gewonnene mechanische Energie wird nun im Funktionsquadrant IV nach Anforderung zum Teil wieder für die Druckerhöhung im Kompressor, wie zum Gewinnen elektrischer Energie im Generator eingesetzt. Die im Generator gewonnene Energie kann nun je nach anfallendem Bedarf beim Verbraucher entweder diesem oder aber dem Speicher zugeführt werden, in dem sie durch Wandlung z.B. wieder als Wärme abgespeichert werden kann oder aber in anderer wie schon zitierter Form. Das nach der Turbine auf niedrigerem Druck vorliegende abgekühlte Trägermedium wird nun dem Verdampfungswärmetauscher wieder zugeführt, womit auch dieser Kreislauf geschlossen ist.

Da die Wärmemenge des gasförmigen Trägermediums durch die Umwandlung von Wärme in kinetische und dann in potentielle Energie abgenommen hat reicht die durch den Umwälzkreislauf zurücktransportierte Wärmemenge nicht aus, um die selbe Menge an Trägermedium zu verdampfen, die aufgestiegen war. Dies wird dann durch die Erhöhung der Basistemperatur des Trägermediums am kühlsten Punkt des Systems, Verfahrens und / oder der Vorrichtung, der am Ausgang der Turbine vorliegt, durch Zufuhr von Wärme ausgeglichen. Ebenso werden alle Verlustwärmen der realen Bauteile zum Erhöhen der Basistemperatur genutzt.

Es versteht sich, dass die beschriebenen Ausführungsformen lediglich Beispiele sind, die im Rahmen der Ansprüche auf vielfältige Weise modifiziert und/oder ergänzt werden können.

## Patentansprüche

1. Verfahren umfassend:
- Umwandeln eines nicht-gasförmigen Trägermediums in ein gasförmiges Trägermedium mittels eingebrachter Wärmeenergie, so dass das gasförmige Trägermedium auf eine vorgegebene Höhe aufsteigt;
- Komprimieren des gasförmige Trägermediums mittels eines Kompressors;
- Rückumwandeln des komprimierten gasförmigen Trägermediums auf der vorgegebenen Höhe in ein nicht-gasförmiges Trägermedium mittels eines Wärme des Trägermediums aufnehmenden Kühlkreislaufs; und
- Rückführen der von dem Kühlkreislauf aufgenommenen Wärme zur Nutzung für eine Erwärmung des Trägermediums.

2. Verfahren nach Anspruch 1, wobei das Komprimieren des gasförmigen Trägermediums wie folgt erfolgt:
- Unmittelbar nach dem Umwandeln des nicht-gasförmigen Trägermediums in ein gasförmiges Trägermedium; oder
- Unmittelbar vor dem Rückumwandeln des komprimierten gasförmigen Trägermediums in ein nicht-gasförmiges Trägermedium; oder
- Auf dem Weg zwischen dem Umwandeln des nicht-gasförmigen Trägermediums in ein gasförmiges Trägermedium und dem Rückumwandeln des komprimierten gasförmigen Trägermediums in ein nicht-gasförmiges Trägermedium.

3. Verfahren nach Anspruch 1 oder 2, umfassend:
- Antreiben einer Turbine durch Dekomprimieren des komprimierten rückgewonnenen nicht-gasförmigen Trägermediums.

4. Verfahren nach einem der Ansprüche 1 bis 3, umfassend:
- Fallenlassen des rückgewonnenen nicht-gasförmigen Trägermediums von einer höheren Höhe auf eine niedrigere Höhe derart, dass das nicht-gasförmigen Trägermedium auf der niedrigeren Höhe eine Turbine antreibt.

5. Verfahren nach einem der Ansprüche 3 oder 4, umfassend:
Nutzen der von der Turbine zur Verfügung gestellte Energie,
- um mittels mechanischer Kopplung das Komprimieren des gasförmige Trägermediums zu unterstützen; oder
- um nach einer Umwandlung in eine andere Energieform mittels der resultierenden Energie die für das Komprimieren des gasförmige Trägermediums benötigte Energie zu reduzieren; oder
- um nach einer Umwandlung in Heizenergie das Trägermedium vor, in oder nach dem Umwandeln des nicht-gasförmigen Trägermediums in ein gasförmiges Trägermedium zusätzlich zu erwärmen.

6. Verfahren nach einem der Ansprüche 3 bis 5, umfassend:
- Kühlen eines vom Kühlkreislauf umfassten Transportmediums mittels des Trägermediums, nachdem dieses zum Antreiben der Turbine genutzt wurde.

7. Verfahren nach einem der Ansprüche 3 bis 5, umfassend:
- Austauschen eines vom Kühlkreislauf umfassten Transportmediums durch nicht-gasförmiges Trägermedium, nachdem dieses zum Antreiben der Turbine genutzt wurde.

8. Verfahren nach einem der Ansprüche 1 bis 7, wobei zusätzlich das Trägermedium während des gesamten Verfahrens einem den Umgebungsdruck übersteigenden Druck unterliegt, der durch das Komprimieren weiter erhöht wird.

9. Verfahren nach Anspruch 8, wobei zusätzlich ein vom Kühlkreislauf umfasstes Transportmedium während des gesamten Verfahrens einem den Umgebungsdruck übersteigenden Druck unterliegt.

10. Verfahren nach einem der Ansprüche 1 bis 9, umfassend:
- zumindest partielles Entnehmen des rückgewonnenen nicht-gasförmiges Trägermediums für eine externe Nutzung.

11. Verfahren nach einem der Ansprüche 1 bis 10, umfassend:
- Führen des gasförmiges Trägermediums während seines Aufstiegs durch mindestens eine Verengung.

12. Vorrichtung umfassend:
- einen Hohlraum;
- einen am unteren Ende des Hohlraums angeordneten Verdampfungsraum, ausgeformt zum Umwandeln eines nicht-gasförmigen Trägermediums in ein gasförmiges Trägermedium mittels eingebrachter Wärmeenergie, so dass das gasförmige Trägermedium auf eine vorgegebene Höhe aufsteigt;
- einen Kompressor, ausgeformt zum Komprimieren des gasförmige Trägermediums;
- einen Kühlkreislauf, ausgeformt zum Rückumwandeln des komprimierten, gasförmigen Trägermediums auf der vorgegebenen Höhe in ein nicht-gasförmiges Trägermedium durch Aufnahme von Wärme des Trägermediums, und ausgeformt zum Rückführen der aufgenommenen Wärme zur Nutzung für eine Erwärmung des Trägermediums.

13. Vorrichtung nach Anspruch 12, wobei der Kompressor wie folgt im Hohlraum angeordnet ist:
- Unmittelbar nach dem Verdampfungsraum; oder
- Unmittelbar unterhalb der vorgegebenen Höhe; oder
- Auf der Strecke zwischen dem Verdampfungsraum und der vorgegebenen Höhe.

14. Vorrichtung nach Anspruch 12 oder 13, umfassend eine Turbine, die ausgeformt ist um zumindest durch ein Dekomprimieren des komprimierten rückgewonnenen nicht-gasförmigen Trägermediums angetrieben zu werden.

15. Vorrichtung nach einem der Ansprüche 12 bis 14, umfassend:
- einen Fallweg, ausgeformt zum Ermöglichen eines Fallenlassens des rückgewonnenen nicht-gasförmigen Trägermediums von einer höheren Höhe auf eine niedrigere Höhe; und
- eine Turbine angeordnet auf der niedrigeren Höhe und ausgeformt um zumindest durch die kinetische Energie von fallendem Trägermedium angetrieben zu werden.

16. Vorrichtung nach einem der Ansprüche 14 oder 15, umfassend zumindest eines des Folgenden:
- eine mechanische Kopplung zwischen der Turbine und dem Kompressor;
- eine Energieumwandlungsanordnung ausgeformt zum Umwandeln der von der Turbine zur Verfügung gestellte Energie in eine andere Energieform und zum Bereitstellen der resultierenden Energie für den Kompressor; und
- Energieumwandlungsanordnung ausgeformt zum Umwandeln der von der Turbine zur Verfügung gestellte Energie in Heizenergie und zum Bereitstellen der Heizenergie für eine zusätzliche Erwärmung des Trägermediums vor, in oder nach dem Umwandeln des nicht-gasförmigen Trägermediums in ein gasförmiges Trägermedium.

17. Vorrichtung nach einem der Ansprüche 14 bis 16, umfassend:
- einen Wärmetauscher ausgebildet zum Kühlen eines vom Kühlkreislauf umfassten Transportmediums mittels des Trägermediums, nachdem dieses zum Antreiben der Turbine genutzt wurde.

18. Vorrichtung nach einem der Ansprüche 14 bis 16, umfassend:
- Austauschmittel ausgeformt zum Austauschen eines vom Kühlkreislauf umfassten Transportmediums durch nicht-gasförmiges Trägermedium, nachdem dieses zum Antreiben der Turbine genutzt wurde.

19. Vorrichtung nach einem der Ansprüche 12 bis 18, umfassend Überdruckmittel ausgeformt zum Einstellen eines den Umgebungsdruck übersteigenden Drucks auf das Trägermedium, der durch den Kompressor weiter erhöht wird.

20. Vorrichtung nach Anspruch 19, wobei die Überdruckmittel ausgeformt sind zum Einstellen eines den Umgebungsdruck übersteigenden Drucks auf ein vom Kühlkreislauf umfasstes Transportmedium.

21. Vorrichtung nach einem der Ansprüche 12 bis 20, umfassend:
- einen Entnahmeanschluss zum zumindest partiellen Entnehmen des rückgewonnenen nicht-gasförmiges Trägermediums für eine vorrichtungsexterne Nutzung.

22. Vorrichtung nach einem der Ansprüche 12 bis 21, umfassend:
- mindestens eine Verengung ausgeformt zum Passierenlassen des gasförmiges Trägermediums während seines Aufstiegs.

23. System umfassend eine Vorrichtung nach einem der Ansprüche 12 bis 22 sowie mindestens eine Vorrichtung ausgeformt zum Gewinnen von Wärmeenergie, die der Vorrichtung nach einem der Ansprüche 12 bis 22 zur Verfügung gestellt wird.

## Claims

1. Method including:
- converting a non-gaseous carrier medium into a gaseous carrier medium by means of introduced heat energy, so that the gaseous carrier medium rises to a predefined height;
- compressing the gaseous carrier medium by means of a compressor;
- reconverting the compressed gaseous carrier medium at the predefined height into a non-gaseous carrier medium by means of a cooling circuit receiving heat of the carrier medium; and
- returning the heat received by the cooling circuit for use in heating the carrier medium.

2. Method according to claim 1, wherein the compressing of the gaseous carrier medium takes place as follows:
- immediately after the converting of the non-gaseous carrier medium into a gaseous carrier medium; or
- immediately before the reconverting of the compressed gaseous carrier medium into a non-gaseous carrier medium; or
- on the passage between the converting of the non-gaseous carrier medium into a gaseous carrier medium and the reconverting of the compressed gaseous carrier medium into a non-gaseous carrier medium.

3. Method according to claim 1 or 2, including:
- driving a turbine by decompressing the compressed recovered non-gaseous carrier medium.

4. Method according to one of claims 1 to 3, including:
- allowing the recovered non-gaseous carrier medium to fall from a higher height to a lower height in such a way that the non-gaseous carrier medium at the lower height drives a turbine.

5. Method according to one of claims 3 or 4, including:
using the energy provided by the turbine
- to assist the compressing of the gaseous carrier medium by means of mechanical coupling; or
- to reduce, after a conversion into a different energy form, by means of the resulting energy the energy required for compressing the gaseous carrier medium; or
- to additionally heat, after a conversion into heat energy, the carrier medium before, in or after the converting of the non-gaseous carrier medium into a gaseous carrier medium.

6. Method according to one of claims 3 to 5, including:
- cooling a transport medium comprised by the cooling circuit by means of the carrier medium after said carrier medium has been used to drive the turbine.

7. Method according to one of claims 3 to 5, including:
- exchanging a transport medium comprised by the cooling circuit with non-gaseous carrier medium after said carrier medium has been used to drive the turbine.

8. Method according to one of claims 1 to 7, wherein the carrier medium is additionally subject throughout the method to a pressure which exceeds the ambient pressure and which is further increased by the compressing.

9. Method according to claim 8, wherein additionally a transport medium comprised by the cooling circuit is subject throughout the method to a pressure exceeding the ambient pressure.

10. Method according to one of claims 1 to 9, including:
- at least partially extracting the recovered non-gaseous carrier medium for external use.

11. Method according to one of claims 1 to 10, including:
- guiding the gaseous carrier medium during its rise through at least one constriction.

12. Device comprising:
- a cavity;
- an evaporation chamber which is arranged at the lower end of the cavity and configured to convert a non-gaseous carrier medium into a gaseous carrier medium by means of introduced heat energy, so that the gaseous carrier medium rises to a predefined height;
- a compressor configured to compress the gaseous carrier medium;
- a cooling circuit configured to reconvert the compressed, gaseous carrier medium at the predefined height into a non-gaseous carrier medium by receiving heat of the carrier medium, and formed for returning the received heat for use in heating the carrier medium.

13. Device according to claim 12, wherein the compressor is arranged in the cavity as follows:
- immediately after the evaporation chamber; or
- immediately below the predefined height; or
- on the section between the evaporation chamber and the predefined height.

14. Device according to claim 12 or 13, comprising a turbine which is formed to be driven at least by decompressing the compressed recovered non-gaseous carrier medium.

15. Device according to one of claims 12 to 14, comprising:
- a falling path formed to allow the recovered non-gaseous carrier medium to fall from a higher height to a lower height; and
- a turbine arranged at the lower height and formed to be driven at least by the kinetic energy from falling carrier medium.

16. Device according to one of claims 14 or 15, comprising at least one of the following:
- a mechanical coupling between the turbine and the compressor;
- an energy conversion arrangement formed for converting the energy provided by the turbine into a different energy form and for providing the resulting energy for the compressor; and
- an energy conversion arrangement formed for converting the energy provided by the turbine into heat energy and for providing the heat energy for additional heating of the carrier medium before, in or after the converting of the non-gaseous carrier medium into a gaseous carrier medium.

17. Device according to one of claims 14 to 16, comprising:
- a heat exchanger formed for cooling a transport medium comprised by the cooling circuit by means of the carrier medium after said carrier medium has been used to drive the turbine.

18. Device according to one of claims 14 to 16, comprising:
- exchange means formed for exchanging a transport medium comprised by the cooling circuit with non-gaseous carrier medium after said carrier medium has been used to drive the turbine.

19. Device according to one of claims 12 to 18, comprising excess pressure means formed for adjusting a pressure on the carrier medium, which pressure exceeds the ambient pressure and is further increased by the compressor.

20. Device according to claim 19, wherein the excess pressure means are formed for adjusting a pressure on a transport medium comprised by the cooling circuit, which pressure exceeds the ambient pressure.

21. Device according to one of claims 12 to 20, comprising:
- an extraction point for at least partially extracting the recovered non-gaseous carrier medium for device-external use.

22. Device according to one of claims 12 to 21, comprising:
- at least one constriction formed for allowing the gaseous carrier medium to pass during the rise thereof.

23. System comprising a device according to one of claims 12 to 22 and also at least one device formed for obtaining heat energy which is provided to the device according to one of claims 12 to 22.

## Revendications

1. Procédé comprenant
- la transformation d'un agent porteur non gazeux en un agent porteur gazeux au moyen d'énergie thermique introduite, de sorte que l'agent porteur gazeux monte à une hauteur prédéfinie ;
- la compression de l'agent porteur gazeux au moyen d'un compresseur ;
- la retransformation de l'agent porteur gazeux comprimé à la hauteur prédéfinie en un agent porteur non gazeux au moyen d'un circuit de refroidissement absorbant de la chaleur de l'agent porteur ; et
- le recyclage de la chaleur absorbée par le circuit de refroidissement pour l'utiliser pour un échauffement de l'agent porteur.

2. Procédé selon la revendication 1, la compression de l'agent porteur gazeux s'effectuant comme suit :
- directement après la transformation de l'agent porteur non gazeux en un agent porteur gazeux ; ou
- directement avant la retransformation de l'agent porteur gazeux comprimé en un agent porteur non gazeux ; ou
- entre la transformation de l'agent porteur non gazeux en un agent porteur gazeux et la retransformation de l'agent porteur gazeux comprimé en un agent porteur non gazeux.

3. Procédé selon la revendication 1 ou la revendication 2, comprenant :
- l'entraînement d'une turbine par décompression de l'agent porteur non gazeux récupéré comprimé.

4. Procédé selon l'une quelconque des revendications 1 à 3, comprenant :
- la chute de l'agent porteur non gazeux récupéré d'une hauteur plus élevée à une hauteur plus faible, de telle sorte que l'agent porteur non gazeux entraîne une turbine sur la hauteur plus faible.

5. Procédé selon l'une quelconque des revendications 3 ou 4, comprenant :
l'usage de l'énergie mise à disposition par la turbine,
- pour assister par couplage mécanique la compression de l'agent porteur gazeux ; ou
- après une transformation dans une autre forme d'énergie, pour réduire au moyen de l'énergie résultante l'énergie requise pour la compression de l'agent porteur gazeux ; ou
- après une transformation en énergie de chauffage, pour échauffer en supplément l'agent porteur avant, pendant ou après la transformation de l'agent porteur non gazeux en un agent porteur gazeux.

6. Procédé selon l'une quelconque des revendications 3 à 5, comprenant
- un refroidissement d'un agent de transport compris dans le circuit de refroidissement au moyen de l'agent porteur, après que celui-ci ait été utilisé pour l'entraînement de la turbine.

7. Procédé selon l'une quelconque des revendications 3 à 5, comprenant :
- un remplacement d'un agent de transport compris dans le circuit de refroidissement par de l'agent porteur non gazeux, après que celui-ci ait été utilisé pour l'entraînement de la turbine.

8. Procédé selon l'une quelconque des revendications 1 à 7, en supplément, l'agent porteur étant soumis pendant l'ensemble du procédé à une pression dépassant la pression ambiante, qui augmente encore sous l'effet de la compression.

9. Procédé selon la revendication 8, en supplément un agent de transport compris dans le circuit de refroidissement étant soumis pendant l'ensemble du procédé à une pression dépassant la pression ambiante.

10. Procédé selon l'une quelconque des revendications 1 à 9, comprenant :
- au moins un prélèvement partiel de l'agent porteur non gazeux récupéré pour un usage externe.

11. Procédé selon l'une quelconque des revendications 1 à 10, comprenant :
- un guidage de l'agent porteur gazeux pendant sa montée à travers au moins un rétrécissement.

12. Dispositif comprenant :
- une cavité ;
- un espace d'évaporation placé sur l'extrémité inférieure de la cavité, conformé pour transformer un agent porteur non gazeux en un agent porteur gazeux au moyen d'énergie thermique introduite, de telle sorte que l'agent porteur gazeux monte à une hauteur prédéfinie ;
- un compresseur, conformé pour comprimer l'agent porteur gazeux ;
- un circuit de refroidissement, conformé pour retransformer l'agent porteur gazeux comprimé à la hauteur prédéfinie en un agent porteur non gazeux, par absorption de la chaleur de l'agent porteur, et conformé pour recycler la chaleur absorbée pour un usage pour un échauffement de l'agent porteur.

13. Dispositif selon la revendication 12, le compresseur étant placé de la manière suivante dans la cavité :
- directement en aval de l'espace d'évaporation ; ou
- directement sous la hauteur prédéfinie ; ou
- sur le trajet entre l'espace d'évaporation et la hauteur prédéfinie.

14. Dispositif selon la revendication 12 ou la revendication 13, comprenant une turbine, qui est conformée pour être entraînée au moins par une décompression de l'agent porteur non gazeux récupéré comprimé.

15. Dispositif selon l'une quelconque des revendications 12 à 14, comprenant :
- une trajectoire de chute, conformée pour permettre une chute de l'agent porteur non gazeux récupéré d'une hauteur plus élevée à une hauteur plus faible ; et
- une turbine, placée à la hauteur plus faible et conformée pour être entraînée au moins par l'énergie cinétique de l'agent porteur en chute.

16. Dispositif selon l'une quelconque des revendications 14 ou 15, comprenant au moins l'un des éléments suivants :
- un couplage mécanique entre la turbine et le compresseur ;
- un agencement de conversion d'énergie, conformé pour convertir l'énergie mise à disposition par la turbine en une autre forme d'énergie et pour la mise à disposition de l'énergie résultante pour le compresseur ; et
- un agencement de conversion d'énergie, conformé pour convertir l'énergie mise à disposition par la turbine en énergie de chauffage et pour mettre à disposition l'énergie de chauffage pour un échauffement supplémentaire de l'agent porteur, avant, pendant ou après la transformation de l'agent porteur non gazeux en un agent porteur gazeux.

17. Dispositif selon l'une quelconque des revendications 14 à 16, comprenant :
- un échangeur thermique, formé pour refroidir un agent de transport compris dans le circuit de refroidissement au moyen de l'agent porteur, après que celui-ci ait été utilisé pour l'entrainement de la turbine.

18. Dispositif selon l'une quelconque des revendications 14 à 16, comprenant :
- des moyens de remplacement, conformés pour remplacer un agent de transport compris dans le circuit de refroidissement par un agent porteur non gazeux, après que celui-ci ait été utilisé pour l'entrainement de la turbine.

19. Dispositif selon l'une quelconque des revendications 12 à 18, comprenant des moyens de surpression, conformés pour le réglage d'une pression dépassant la pression ambiante sur l'agent porteur, qui est encore augmentée par le compresseur.

20. Dispositif selon la revendication 19, les moyens de surpression étant conformés pour régler une pression dépassant la pression ambiante sur un agent de transport compris dans le circuit de refroidissement.

21. Dispositif selon l'une quelconque des revendications 12 à 20, comprenant :
- un raccord de prélèvement pour le prélèvement au moins partiel de l'agent porteur non gazeux récupéré pour un usage externe au dispositif.

22. Dispositif selon l'une quelconque des revendications 12 à 21, comprenant :
- au moins un rétrécissement, conformé pour laisser passer l'agent porteur gazeux pendant sa montée.

23. Système comprenant un dispositif selon l'une quelconque des revendications 12 à 22, ainsi qu'au moins un dispositif, conformé pour récupérer de l'énergie thermique, qui est mise à disposition du dispositif selon l'une quelconque des revendications 12 à 22.
